(19) **Europäisches Patentamt / European Patent Office / Office européen des brevets**

(11) **EP 3 621 448 B1**

(12) **EUROPEAN PATENT SPECIFICATION**

(45) Date of publication and mention of the grant of the patent:
**07.01.2026 Bulletin 2026/02**

(21) Application number: **18724184.9**

(22) Date of filing: **04.05.2018**

(51) International Patent Classification (IPC):
**A23G 3/20** (2006.01)   **A23G 3/34** (2006.01)
**A23G 3/52** (2006.01)   **A23G 3/54** (2006.01)

(52) Cooperative Patent Classification (CPC):
**A23G 3/2069; A23G 3/0082; A23G 3/52; A23G 3/54**

(86) International application number:
**PCT/EP2018/061628**

(87) International publication number:
**WO 2018/206471 (15.11.2018 Gazette 2018/46)**

(54) **METHOD AND APPARATUS FOR PREPARING AN EDIBLE FOOD COMPOSITION**

VERFAHREN UND VORRICHTUNG ZUR HERSTELLUNG EINER ESSBAREN NAHRUNGSMITTELZUSAMMENSETZUNG

PROCÉDÉ ET APPAREIL POUR LA PREPARATION D'UNE COMPOSITION ALIMENTAIRE CONSOMMABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2017 EP 17169916**

(43) Date of publication of application:
**18.03.2020 Bulletin 2020/12**

(73) Proprietor: **Société des Produits Nestlé S.A.**
**1800 Vevey (CH)**

(72) Inventors:
• **GERMAN, Jamey**
  **York YO23 1NX (GB)**
• **NEGREIROS, Alessandra**
  **YORK YO10 4BN (GB)**
• **SUTTON, Jonathan**
  **York**
  **North Yorkshire YO32 9SG (GB)**
• **BALDWIN, Adam, Lee**
  **York**
  **North Yorkshire, YO31 9BR (GB)**

(74) Representative: **Slaven, John William**
**Société des Produits Nestlé S.A.**
**Avenue Nestlé 55**
**1800 Vevey (CH)**

(56) References cited:
| | |
|---|---|
| EP-A1- 1 673 978 | WO-A1-01/30174 |
| WO-A1-2004/056191 | WO-A1-2015/165926 |
| WO-A2-2004/057975 | DE-B3- 102015 205 597 |
| US-A- 2 082 313 | US-A- 5 481 968 |

**Description**

The present subject matter relates to an apparatus for depositing a liquid, semi-liquid or semi-solid food product to produce a product having inclusions therein and to a method for using such an apparatus. More particularly, but not exclusively, the subject matter relates to such an apparatus and method for use in filling mould cavities for finished confectionery products. The subject matter also relates to a method for depositing a liquid, semi-liquid or semi-solid food product.

It is known to deposit liquid, semi-liquid or semi-solid food products in confectionery manufacturing processes. Such products may, for example, be deposited into a mould cavity for producing a finished confectionery product. One example of such a process is the depositing of liquid chocolate into a mould cavity for the production of a chocolate bar. Fillings for confectionery products, such as fondants, caramels, mousses or truffles, may also be deposited.

As used herein the term 'chocolate' denotes any products that meet a legal definition of chocolate in any jurisdiction and also include product in which all or part of the cocoa butter is replaced by cocoa butter equivalents (CBE) and/or cocoa butter replacers (CBR). The terms 'chocolate compound' or 'compound' as used herein (unless the context clearly indicates otherwise) denote chocolate analogues characterised by presence of cocoa solids (which include cocoa liquor/mass, cocoa butter and cocoa powder) in any amount, notwithstanding that in some jurisdictions compound may be legally defined by the presence of a minimum amount of cocoa solids. The term 'choco-material' as used herein denotes both chocolate and compound. The term 'chocolate coating' as used herein also refers to a chocolate shell and denotes coatings made from any choco-material. The term 'chocolate confectionery' as used herein denotes any foodstuff which comprises choco-material and optionally also other ingredients and thus may refer to foodstuffs such confections, cakes and/or biscuits whether the choco-material comprises a chocolate coating and/or the bulk of the product. Unless the context clearly indicates otherwise it will also be appreciated that in the present invention any one choco-material may be used to replace any other choco-material and neither the term chocolate nor compound should be considered as limiting the scope of the invention to a specific type of choco-material.

In order to produce certain types of food product, it is desirable to add a gas into liquid chocolate prior to depositing. This process is typically known as aeration, and can be used to provide different effects according to the pressures and gases used. Various pressures have been proposed in different applications ranging from about 4 bar to 12 bar. Different gases can also be used in different applications such as carbon dioxide, nitrogen or any other suitable gas for use in an edible product (e.g. $N_2O$).

For example, adding gas to liquid chocolate prior to depositing can result in a chocolate product with visible bubbles in the final chocolate product; a process typically known as "macro aeration".

By way of a further example, adding gas to liquid chocolate prior to depositing can result in a chocolate product where the bubbles that are formed are too small to be seen by the naked eye in the final chocolate product; a process typically known as "micro aeration".

The applicant has described in WO2016-198659 a nozzle for depositing aerated chocolate to address the problem of buildup of chocolate mass around the exit orifice of a nozzle of a depositing apparatus, an effect which is described herein as 'cauliflowering' in view of the similar appearance assumed by such chocolate mass.

WO 2010/102716 describes an example of an apparatus for depositing a liquid, semi-liquid or semi-solid food product, the apparatus comprising: a fixed volume chamber for receiving the food product under a positive pressure, the chamber being defined by chamber walls, one of the chamber walls being provided with an outlet orifice for depositing the food product, the outlet orifice being provided with a first sealing surface; and a valve spindle arranged for reciprocating movement within the chamber, the length direction of the valve spindle extending substantially perpendicular to the chamber wall in which the outlet orifice is provided, a first end of the valve spindle being provided with a second sealing surface; wherein the second sealing surface of the valve spindle is arranged for abutting the first sealing surface of the outlet orifice to thereby close the outlet orifice.

EP 2016837 discloses (see the Abstract) an apparatus with at least one discharge passageway extending to at least one elongate discharge outlet for depositing a confectionery mass, wherein at least one discharge passageway diverges in a direction towards the discharge outlet. It is described in paragraph [0014] that generally, in a plan view, the discharge passageway can be described to have the shape of a fishtail and that, described three-dimensionally, the passage is a hollow truncated pyramid, with the discharge outlet constituting the base, and the inlet end of the discharge passageway constituting the upper part of the pyramid. It is described in paragraph [0010] in EP2016837 that the length of the discharge outlet extends substantially perpendicular to a direction in which molds or any other molding means is moved relative to the discharge outlet, hence the confectionery mass can be deposited into the molds in the shape of relatively wide strips. It is described in paragraph [0011] in EP2016837 that depositing a relatively wide strip of aerated confectionery mass into a mould can reduce a need for shaking or vibrating of the mould.

Mixing solid inclusions such as raisins or nut pieces into aerated food compositions presents a challenge. As the inclusions are mixed into the composition they tend to break down the foam or, when inclusions are present before aeration, they reduce the effectiveness of foam generation. Food compositions such as confectionery compositions (e.g. chocolate) are typically be handled and deposited via conduits and orifices which have sizes comparable to that of common inclusions. Therefore adding inclusions to these compositions may restrict or block the flow of product. Accordingly, it is desired to find a solution to the problem of depositing of aerated food compositions such as chocolate that also have inclusions therein.

When producing products such as chocolate tablets where the inclusions are of lower density than chocolate, the inclusions tend to float to the back of the tablet. One solution to prevent migration of inclusions within a fluid composition such as molten chocolate mass would be to modify the viscosity of the chocolate mass such that it becomes less easy for the inclusions to float to the back of the tablet. However adjusting viscosity requires the product recipe to be modified, for example reducing the proportion of fat, and this may not be desirable as it can have an adverse effect on the taste or other sensory attributes of the product. An alternatively means to adjust the viscosity of a chocolate is to modify its temper settings to increase the viscosity, however then over tempering of chocolate will have other adverse impacts on consumer desired properties of the chocolate.

Surprisingly the applicant has found by adding gas to the chocolate to closely match the density of the inclusions being added it is possible to ensure that the inclusions remain well dispersed through the whole mass and do not migrate within the mass. In particular it has been found that inclusions may be placed to be more clearly visible on the top surface of the tablet without migrating from the surface producing a product with improved consumer perception. By aerating the chocolate (preferably micro-aerating the chocolate) not only are the densities of chocolate and inclusion more closely matched, but the in some embodiments aeration also increases the yield of chocolate per volume of the chocolate mass which brings an additional beneficial increase in viscosity.

The applicant's patent application WO2015-91500 describes a method and apparatus to prepare a moulded chocolate bar having inclusions therein where the inclusions are first deposited into a mould followed by the chocolate. This method allows the inclusions to be located precisely within the mould to ensure that the inclusions are clearly visible on the surface of the bar after demoulding. However this solution differs significantly from the present invention in that in the resultant product the majority of the inclusions remain uncoated in chocolate.

WO2004/056191 relates to producing M&M® or Smarties® type chocolates with small cores but no inclusions.

WO2015/165926 relates to a device, method and system for producing a granule-blended mass. It makes use of an air lock type principle, with an intermediate, zone which can either be pressurised or not depending on the valve position at the entrance and exit.

US2082313 discloses macro-aerated chocolate products. The cavities are visible to the naked eye and the majority of cavities may vary from a quarter of a millimeter to 3 millimeters in length or width.

Therefore broadly in accordance with the present invention there is provided a process for preparing a food composition having inclusions dispersed in solid material, the process comprising the steps of:

(a) providing an apparatus suitable for use in a process of the present invention, the apparatus comprising:

i) at least one vessel suitable for receiving respectively fluid edible composition (fluid receiving vessel) and/or inclusions (inclusion receiving vessel);
ii) at least one input conduit, in fluid connection with the respective at least one receiving vessel where present, the least one conduit being suitable for transport of respective fluid and/or inclusions to a processing chamber;
iii) a processing chamber comprising a density adjusting means capable of altering the density of the fluid composition, in the presence of inclusions, the density adjusting means being controlled by a controlling means;
iv) an output conduit in fluid connection with the processing chamber so the material having inclusions dispersed therein can be transported through the output conduit to be collected for subsequent use and/or to other apparatus for further processing;

characterized in that:

A) the input conduit and/or processing chamber (and the at least one receiving vessel where present) comprise at least one sensing means that measure at least one input parameter, where the at least one input parameter are capable of determining directly and/or indirectly: the instant density of the inclusions and/or the fluid composition in the apparatus; and
B) the density adjusting means is controllable by control means to alter the density of the fluid composition, where the control means and sensing means are in direct or indirect connection so control parameters are capable of being generated directly and/or indirectly in response to changes in the input parameters;

(b) adding an inclusion and/or plurality of inclusions to the inclusion receiving vessel and/or adding an edible fluid composition (precursor to the solid material) to the fluid receiving vessel;

(c) generating at least one input parameter from the fluid composition and/or inclusion(s) using the at least one sensing means and before the fluid and/or inclusions are present in the processing chamber; the least one input parameter being used to calculate a density of inclusion(s) and/or density of fluid composition that will be transported to the processing chamber at a given moment;

(d) transporting the inclusion(s) and/or the fluid composition to the processing chamber; the inclusion(s) being added to the fluid composition in a pre-determined pattern;

(e) generating at least one control parameter to control:

(i) operation of the density adjusting means in the processing chamber and/or
(ii) transport of the fluid composition and/or inclusions to the processing chamber;

(e) adjusting the density of the fluid composition in the processing chamber using the at least one control parameter to control the density adjusting means, the control parameter being calculated from the at least one input parameter so that the density adjusting means will substantially match (preferably match) the density of inclusion(s) added and/or to be incorporated therein; and

(f) depositing the fluid composition through the output conduit onto a substrate;

(g) allowing the fluid composition to solidfy with the inclusion(s) dispersed therein;

to form an food product comprising a solid material with inclusion(s) dispersed therein in the pre-determined pattern.

In a preferred embodiment of the process of the present invention there is provided a process, for preparing an aerated food composition having inclusions dispersed in solid material where the material is aerated and the dispersion is in a pre-determined pattern, the process comprising the steps of:

(a) providing an apparatus suitable for use in a process of the present invention, the apparatus comprising:

i) at least one vessel suitable for receiving respectively fluid edible composition (fluid receiving vessel) and/or inclusions (inclusion receiving vessel);
ii) at least one input conduit, in fluid connection with the respective at least one receiving vessel where present, the least one conduit being suitable for transport of respective fluid and/or inclusions to a processing chamber;
iii) a processing chamber comprising a density adjusting means which is an aerating means capable of incorporating gas into the fluid composition, in the presence of inclusions, the aerating means being controlled by a controlling means;
iv) an output conduit in fluid connection with the processing chamber so the aerated material having inclusions dispersed therein can be transported through the output conduit to be collected for subsequent use and/or to other apparatus for further processing;

characterized in that:

A) the input conduit and/or processing chamber (and the at least one receiving vessel where present) comprise at least one sensing means that measure at least one input parameter, where the at least one input parameter are capable of determining directly and/or indirectly: the instant density of the inclusions and/or the fluid composition in the apparatus; and
B) the aerating means is controllable by control means to control the amount of gas delivered to the fluid composition;

(b) adding an inclusion and/or plurality of inclusions to the inclusion receiving vessel and/or adding an edible fluid composition (precursor to the solid material) to the fluid receiving vessel;

(c) generating at least one input parameter from the fluid composition and/or inclusion(s) using the at least one sensing means before the fluid and/or inclusions are present in the processing chamber; the least one input parameter being used to calculate a density of inclusion(s) and/or density of fluid composition that will be transported to the processing chamber at a given moment;

(d) transporting the inclusion(s) and/or the fluid composition to the processing chamber; the inclusion(s) being added to the fluid composition in a pre-determined pattern;

(e) generating at least one control parameter to control:

(i) operation of the aerating means to aerate the fluid composition in the processing chamber and/or
(ii) transport of the fluid composition and/or inclusions to the processing chamber;

(e) aerating the fluid composition in the processing chamber using the at least one control parameter to control the aerating means so a density of a fluid portion of the composition after aeration is adjusted from the density of the fluid composition before aeration, the control parameter calculated from the at least one input parameter so that the aerating means will substantially match (preferably match) the density of inclusion(s) added and/or to be incorporated therein; and

(f) depositing the aerated fluid composition through the output conduit onto a substrate;

(g) allowing the aerated fluid composition to solidify with the inclusion(s) dispersed therein;

to form an aerated food product comprising a solid material with inclusion(s) dispersed therein in the pre-determined pattern.

In one more preferred embodiment of an aerating process of the invention in step B) the aerating means is controllable by control means operated on by control parameters in a feedback loop to control the amount of gas delivered to the fluid composition, where the control means and sensing means are in direct or indirect connection so control parameters are capable of being generated directly and/or indirectly optionally substantially in real time in response to changes in the input parameters.

In another alternative more preferred embodiment of an aerating process of the invention the sensing means comprises measurement(s) taken before the process starts; and the aerating means is controllable by control means which comprises presetting the aerating means based on fixed control parameters and/or input parameters calculated from the sensing means measurement determined before the process starts.

The fluid edible composition preferably comprises a liquid, semi-liquid or semi-solid food product, more preferably is a fat based confectionery material, even more preferably a choco-material more preferably chocolate mass or compound mass.

In aeration step (e) it will be understood that the density of the fluid composition in the processing chamber is measured and/or calculated for the fluid portion of the composition without any inclusions even if the composition within the processing chamber is a mixture also comprising inclusions.

In aeration step (e) it is preferred that the density of the inclusions used to calculate the at least one control parameter that is measured and/or calculated for the inclusions immediately before they are added and/or incorporated in the fluid composition in the processing chamber. However it will be appreciated that in one embodiment to a first approximation the initial inclusion density and that of the inclusions immediately before addition and/or incorporation in the fluid composition in the processing chamber will be substantially the same and therefore for convenience (as it may be easier and simpler to calculate and/or measure) the initial inclusion density may be used to calculate the at least one control parameter in step (e).

In another embodiment the process of the invention, the process is preferably continuous and the instant density of fluid is matched to the density of the specific inclusions added to that fluid at any point in time so that for each portion of the mixture of aerated fluid and inclusion deposited (for example within a mould), the inclusions and surrounding fluid will have substantially the same density during deposition and/or cooling.

In an alternative embodiment the process of the invention may be a batch or semi-batch process and the density of fluid may be matched to the density of the specific inclusions added to that fluid for each batch (optionally only once per batch) so that for each batch of the mixture of aerated fluid and inclusion deposited (for example within a mould), the inclusions and surrounding fluid will have substantially the same density during deposition and/or cooling.

The process of the present invention will substantially prevent migration or movement of inclusions to a significant degree within the fluid composition during deposition and/or cooling of the fluid before the fluid solidifies to fix the inclusions in place in the resultant food composition or product. Thus for example either inclusions can be added to be dispersed homogenously within a product (e.g. so they don't fall to the bottom of the mould) or inclusions can be added to create a pre-determined pattern which will be retained during cooling and thus also appear in the solid food product.

It will be appreciated that the frequency of sampling of the sensing means, generation of input parameters, calculation of control parameters and/or adjustment of the aeration means may determine the accuracy of the overall density matching of inclusion and fluid composition. The smaller the product the greater the frequency may be used as the few inclusions that may be incorporated in a product portion and the likely greater density variation between inclusions present in each portion. For larger products the product may be aerated as described herein to reduce the fluid density to a value averaged over a wider sample of inclusions as a compromise to minimize average migration of inclusions within a product portion whilst accepting some individual inclusions may still sink or float within the fluid more than average for inclusions within that portion.

The process of the invention also allows use of a much wider variety of inclusion mixtures of inclusions having a wide range of different densities as the density of the fluid can be matched to density of inclusions used at any instant even if the components of the inclusion mixture fluctuate to a great degree during the process for example due to inefficient mixing. It may even be possible to change the inclusions used in the process (e.g. by changing the inclusions added to the inclusion receiving vessel or vessels) in a continuous manner without having to stop the process and adjust the apparatus as in the process of the invention the degree of aeration can be adjusted automatically and optionally in real time to compensate for fluctuation in the density of inclusions. Optionally a plurality of inclusion receiving vessels having different inclusions therein can be used as a source of the inclusion mixture used and the least one input conduit(s) can be switched between multiple vessels (optionally continuously) to vary the type, relative proportion and/or densities of different inclusions that are transported to the processing chamber.

In an alternative embodiment of the invention the fluid density can be fixed (optionally without aeration or at constant aeration) and in the process of the invention the inclusion mixture can then be adjusted continuously to match the fixed fluid density during deposition and cooling of the fluid to form the resultant food product.

In a further embodiment of the invention in the process of the invention both the fluid density is adjusted by aeration and the density of the corresponding inclusion mixture is also adjusted at the same time (for example by adjusting the proportion in the inclusion mixture of different inclusions having different densities), so that during deposition and cooling of the fluid in the presence of inclusions to form portions of food product (e.g. moulded product) both fluid and inclusion densities substantially continuously substantially match (preferably continuously match), optionally both adjustments being performed continuously.

Usefully in one embodiment of the apparatus of the invention comprises at least one vessel which acts as both the at least one fluid receiving vessel and the at least one inclusion receiving vessel, more usefully the apparatus comprises only one receiving vessel that receives both fluid composition and inclusions. In this embodiment it is then preferred that the density of fluid and/or inclusions (e.g. each batch thereof) is already measured before they are mixed in the single receiving vessel (optionally outside the apparatus of the invention, for example by a supplier of the batch of these ingredients) and such pre-determined densit(ies) then comprise whole or part of the input parameters, in which case the sensory means may either be unnecessary of comprise some indicating means (such as bar code) which links the ingredient batch to the relevant input parameter and/or density.

However it is preferred that inclusions and fluid are separately added to the apparatus. Conveniently another embodiment of the apparatus of the invention comprises at least one fluid receiving vessel and/or at least one inclusion receiving vessel which are not the same vessel if both are present, more conveniently at least one fluid receiving vessel and at least one inclusion receiving vessel are present, even more conveniently the apparatus comprises at least two receiving vessels; and most conveniently two receiving vessels.

Preferably the pre-determined pattern is a homogenous dispersion of a plurality of inclusions within the fluid composition.

In one preferred embodiment of the invention, conveniently the inclusion or inclusion mixture that is added to the receiving vessel (the initial inclusion mix) has an average density (initial inclusion density) which is less than the average density (initial fluid density) of the fluid composition that is added to the receiving vessel (the initial fluid). At least one, preferably both initial densities may be determined by at least one input parameter as described herein. In this embodiment the initial inclusion density is lower that the initial fluid density so a proportion of (for example all of) the low density inclusions would otherwise tend to float up in the high density fluid (e.g. the dense fluid migrates to bottom under gravity forcing the inclusions to the top of the fluid) if no further steps were taken. In this embodiment the gas used to aerate the fluid composition may have (or be adjusted to have) a lower density than both the initial inclusion density and the initial fluid density such that after aeration in the process of the invention the resultant density of the fluid portion (resultant fluid density) of the aerated fluid composition in which the inclusion(s) are held is reduced from the initial fluid density to a resultant fluid density that substantially matches the initial inclusion density.

In general as individual inclusions may contain entrained air (e.g. in surface irregularities and/or air pockets therein) and/or comprise low density components the initial inclusion density (which is averaged over many individual inclusions) is likely to be less that the initial fluid density, especially where the fluid comprises a dense material such as chocolate mass.

However in an alternative less preferred embodiment of the invention, usefully the initial inclusion density of the initial inclusion mix is more than the initial fluid density of the initial fluid composition so a proportion of (for example all of) the high density inclusion(s) would otherwise tend to sink down in the low density fluid (e.g. migrate to the bottom of the fluid under gravity) if no further steps were taken. In this embodiment the gas used to aerate the fluid composition may have (or be adjusted to have) a higher density than both the initial inclusion density and the initial fluid density such that after aeration in the process of the invention the resultant fluid density of the aerated fluid is increased from the initial fluid density to substantially match the initial inclusion density. The average density of the gas or gases used to aerate the fluid can if needed be adjusted to a suitably high density by for example inclusion of suitable dense (food safe) additives dispersed therein before the gas or gases are used in the aeration step.

The degree of aeration in the process of the invention is controlled by control means which may comprise any suitable means (such as a valve) that controls the amount of gas added to the fluid per unit volume; and/or modifies the flow rate of gas injected into the fluid. The control means may use any suitable depositor and/or aerator known in the art. In one preferred embodiment the control means for aeration can be operated by continuous generation of the at least one control parameter in response to feedback from measuring the instant density of the inclusions added at a particular point (i.e. using the at least one sensing means comprising part of the apparatus to generate the at least one input parameter. Alternatively or as well as the previous embodiment, in another embodiment the control means for aeration may comprise the step of setting (optionally automatically or by hand) at least one value at the start of the process (the control parameter) based on an input parameter and sensing means that together comprise the step of initially measuring and/or calculating of average density of the initial inclusions that will be added to the fluid (which measurement and/or calculation may be automatic or by hand).

Usefully the aeration is micro-aeration (especially where the fluid is choco-material such as chocolate or compound), i.e. the bubbles are substantially invisible to the naked eye and thus the visible appearance of the fluid in product would be substantially equivalent to the same product made with a non-aerated fluid.

Broadly in another aspect of the present invention there is provide an apparatus suitable for use in the process of the present invention the apparatus comprising:

i) at least one vessel suitable for receiving respectively fluid edible composition (fluid receiving vessel) and/or inclusions (inclusion receiving vessel);

ii) at least one input conduit, in fluid connection with the respective at least one receiving vessel where present, the least one conduit being suitable for transport of respective fluid and/or inclusions to a processing chamber;

iii) a processing chamber comprising an aerating means capable of incorporating gas into the fluid composition, in the presence of inclusions, the aerating means being controlled by a controlling means;

iv) an output conduit in fluid connection with the processing chamber so the aerated material having inclusions dispersed therein can be transported through the output conduit to be collected for subsequent use and/or to other apparatus for further processing;

characterized in that:

A) the input conduit and/or processing chamber (and the at least one receiving vessel where present) comprise at least one sensing means that measure at least one input parameter, where the at least one input parameter are capable of determining directly and/or indirectly: the instant density of the inclusions and/or the fluid composition in the apparatus; and

B) the aerating means is controllable by control means operated on by control parameters [in a feedback loop] to control the amount of gas delivered to the fluid composition, where the control means and sensing means are in direct or indirect connection so control parameters are capable of being generated directly and/or indirectly in response to changes in the input parameters.

It has been known to prepare chocolate containing gas bubbles (commonly nitrogen or carbon dioxide). However such products typically the bubbles are visible to the consumer (such as in the products sold by the applicant under the Aero® registered trade mark). Such visible bubbles with an average diameter of 100 microns or above are commonly known as macro-aeration. Chocolate with bubbles of a size which are sufficiently small so the bubbles are not visible to the naked eye, typically with an average bubble diameter of less than 100 microns is known as micro-aeration. There are technical challenges with micro-aerating chocolate. For example the gas must be injected into the chocolate mass in a more precise method using specialized equipment otherwise there is a risk that the bubbles may coalesce to form larger bubbles. Care has to also be taken in terms of depositing. Micro-aerated chocolate mass is very sensitive to any form of mechanical stress, which causes coalescence. A pressurized deposit, directly into the mould is therefore required to ensure optimal aeration quality.

Conveniently the plastic viscosity of the pre-aerated choco-material of the invention is measured herein according to ICA method 46 (2000) under standard conditions unless otherwise stated and more preferably is from 0.1 to 10 Pa.s. In an embodiment, this may be measured using a Haake VT550.

The micro-aerated choco-material of the invention described herein (and/or made according to any process of the invention as described herein) has a total bubble surface area (TSA) of from 0.5 to 2.2, preferably from 0.5 to 1.5, preferably from 0.5 to 1.2; preferably from 0.55 to 1.10, more preferably from 0.6 to 1.0; most preferably from 0.65 to 0.90, for example from 0.7 to 0.8 m$^2$ per 100 g of the aerated choco-material. The term surface area or total surface area (TSA) referred to herein can be calculated from equation (1) herein and/or measured by any suitable apparatus or method known to those skilled in art. In one embodiment of the invention the TSA is a specific surface area (SSA) and may be measured as described in the article 'Determination of Surface Area. Adsorption Measurements by Continuous Flow Method' F. M. Nelsen, F. T. Eggertsen, Anal. Chem., 1958, 30 (8), pp 1387-1390 for example using nitrogen gas and SSA calculated from the BET isotherm.

Equation (1):

$$TSA = \frac{3.P.m_{ac}}{d_{ac}.r} \quad (1)$$

where TSA is total bubble surface area, P is porosity of the aerated choco-material, $m_{ac}$ is mass of aerated composition (g), $d_{ac}$ is density of aerated composition (g/cm$^3$) and r is the radius of a bubble of mean size (cm) and the values for , P are from 11 to 19%.

In the invention, $d_{ac}$ is density of aerated composition (g/cm$^3$), which is lower than the density of a non-aerated composition. In an embodiment, the $d_{ac}$ is less than 1.33 g/cm$^3$, less than 1.30 g/cm$^3$, less than 1.25 g/cm$^3$, less than 1.20 g/cm$^3$, less than 1.18 g/cm$^3$, less than 1.15 g/cm$^3$, less than 1.10 g/cm$^3$. In an embodiment, the $d_{ac}$ is more than 1.00 g/cm$^3$, more than 1.03 g/cm$^3$,

more than 1.05 g/cm$^3$, more than than 1.07 g/cm$^3$, more than than 1.10 g/cm$^3$, more than than 1.12 g/cm$^3$, and more than 1.15 g/cm$^3$. In a preferred embodiment, $d_{ac}$ is more than 1.00 g/cm$^3$ and less than 1.33 g/cm$^3$.

In an embodiment, the radius r, is less than 50 microns, less than 45 microns, less than 40 microns or less than 35 microns. In an embodiment, the radius r is greater than 5 microns, greater than 10 microns, greater than 20 microns and greater than 25 microns. For example, the radius r is less than 50 microns and greater than 5 microns.

Usefully the choco-material is chocolate or compound, more usefully chocolate, most usefully dark and/or milk chocolate, for example milk chocolate such as a moulded milk chocolate tablet (optionally with inclusions and/or fillings therein).

In one embodiment of the invention the homogeneity index that measures how uniformly the bubbles are distributed within the composition may be determined by taking an image (from X-ray tomography and/or CLSM) and measuring the number of bubbles that intersect along at least 3 parallel horizontal lines of equal length (preferably at least 1 cm) located on the image to be equally spaced from each other and the image edges. The ratio of the minimum number of bubbles on one of these lines to the maximum number of bubbles on one of these lines can be defined as a number bubble homogenous distribution index (NBHDI) which may be at least 0.8, preferably greater than or equal to 0.85, more preferably greater than or equal to 0.9, most preferably ≥ 0.95, for example about 1.

In another alternative or cumulative embodiment of the invention the homogeneity index that measures how uniformly the bubbles are distributed may be determined by taking an image (from X-ray tomography and/or CLSM) and measuring along each of at least 3 parallel horizontal lines of equal length (preferably at least 1 cm) located on the image to be equally spaced from each other and the image edges, the length of each line that lies inside the void of a gas bubble. The ratio of the minimum void length on one of these lines to the maximum void length on one of these lines can be defined as a void length bubble homogenous distribution index (VLBHDI) which may be at least 0.8, preferably greater than or equal to 0.85, more preferably greater than or equal to 0.9, most preferably ≥ 0.95, for example about 1.

In another aspect of the micro-aerated choco-material of invention the inert gas bubbles are also characterised by the parameters X(90,3) of 100 microns; and Q(0) of 20 microns.

Bubble size may be measured from images obtained using suitable instruments and methods known to those skilled in the art. Preferred methods comprise X-ray tomography and/or confocal laser scanning microscopy (CLSM), more preferably X-ray tomography. Both these methods are described more fully later herein.

In various embodiments of the present invention, which values for parameters that are preferred will vary within the claimed values depending on the recipe of the choco-material that is used. However to exhibit the advantages described herein the choco-material will have at least the parameter values given herein.

By micro-aerating a number of different chocolate recipes under different aeration conditions, the applicant has found those optimal composition and/or process parameters of the invention which are selected to achieve corresponding and unexpectedly advantageous properties in the micro-aerated chocolate (as described herein). These parameters define aspects of the present invention.

Without wishing to be bound by any theory, the applicant has observed that micro-aeration increases the viscosity of the aerated chocolate mass post deposit. It is believed that the small bubbles act analogously to small particles an increase the internal surface area for interactions to occur within the fluid chocolate mass. The applicant has selected the parameters used to define the present invention as those such that the degree of aeration is enough to increase the viscosity of the aerated chocolate mass sufficiently to stabilise the gas bubbles and reduce or eliminate coalescence. Thus the micro-sized bubbles that are formed have a more uniform size (narrow size distribution) and are dispersed more homogeneously throughout the chocolate that in previous micro-aerated chocolates. This produces micro-aerated chocolate of high quality (e.g. as determined by the resultant advantageous properties described herein).

This invention enables the pre-determined (e.g. homogenous) distribution of inclusions throughout a product such as a chocolate tablet, by matching the density of the aerated product (preferably micro-aerated chocolate) with that of the inclusion. The added viscosity (higher yield) of the aerated material also helps to hold the inclusions in place.

Usefully a particular nozzle design may be used to homogeneously mix the inclusions into micro-aerated chocolate using a screw feeder. The inclusions tested were hazelnuts and almonds, the chocolate was Extrafino (Spain), aerated to a 14.5% porosity.

Micro-aeration delivers the same size impression but with less chocolate and by reducing the amount of chocolate it is possible to increase the level of inclusions which are typically the healthier component of such the product, lower in sugar.

Consumer perception is improved in terms of a greater number of inclusions being visible on the top surface of the bar. Contrast between inclusion and chocolate is greater, again positively impacting perception of more inclusions

A cost benefit is that less chocolate (and potentially inclusions) are required to deliver a product of the same volume as products made by prior art methods.

The applicant's co-pending application (EP16190093.1) describes a process for incorporation of inclusions into an aerated filling, however the invention uses specific fat blends to match the viscosity of the filling to the inclusions and such blends which could not legally be used in chocolate. This approach also arise predominately to a viscosity effect rather than density matching as the level of aeration is used in a filling is much higher than used in the present invention e.g. to micro-aerate chocolate.

The composition and process of the invention, where aeration is used to match the density of the bulk composition to the density of the inclusions in which they are dispersed, allows inclusions to be initially added and/or dispersed in the composition uniformly and evenly into the fluid composition (and/or in a predetermined pattern) and then substantially retain the same relative positions without the significant agglomeration or subsequent movement of the inclusions in the liquid as it cools (e.g. under gravity not clumping under gravity to the bottom of the mould after deposition). The bulk of the composition is fluid whilst the inclusions are mixed therein so the inclusions are not subject to a destructive level of shear. Once the inclusions are mixed in the aerated fluid or semi fluid composition, the matched density prevents substantial floating or sinking of the inclusions in the fluid for example as the aerated composition cools and solidifies. Thus the inclusions remain in place dispersed as initially intended within the product (e.g. homogenously or in a pre-determined pattern), resulting in a product having an attractive appearance and long term stability.

The aerated compositions of the invention comprising one or more inclusions may preferably comprise an aerated confectionery fat based composition, for example a fat based confectionery composition such as filling and/or a choco-material.

Usefully the inclusions may have a harder texture than the composition into which they are incorporated, more usefully comprising fruits, fruit pieces (including nuts) and/or other edible crispy and/or hard pieces.

Preferred inclusions have an average size from 1 to 50 mm, more preferably from 2 to 40 mm, and even more preferably from 3 to 25 mm; most preferably from 5 to 10 mm.

In a further embodiment of the invention the aerated food composition of the invention comprise inclusions with an average diameter greater than 2 mm, for example inclusions which are retained by a sieve with a 2 mm opening. The inclusions may have a diameter ranging from 2 mm to 22.6 mm, for example inclusions which pass through a sieve with an opening of 22.6 mm but are retained by a sieve with a 2 mm opening. The inclusions may have a diameter ranging from 2.83 mm to 11.2 mm, for example inclusions which pass through a sieve with an opening of 11.2 mm but are retained by a sieve with a 2.83 mm opening.

Conveniently in one embodiment the inclusions are distributed substantially homogenously (evenly and uniformly) initially within fluid composition in the process of the invention. Usefully in another embodiment the inclusions are distributed in a predetermined pattern (which may not be homogenous) within the fluid composition in the process of the invention where the pattern is for example aesthetically pleasing to the end consumer

In either case fluid compositions of the invention are aerated to match the density to hold the inclusions substantially in place and prevent significant movement within the fluid composition - for example when forming a filling as part of a filled product or within a mould. Thus the aerated fillings of the invention substantially hinder and/or prevent agglomeration and/or sinking of the inclusions to the bottom of the composition e.g. under gravity so that the initial distribution of inclusions (homogeneous and/or pre-determined pattern) is substantially retained in the final composition, e.g. once it has cooled and solidified.

Conveniently the inclusions comprise any of the following non-limiting list (more conveniently selected from the group consisting of):

fruits or fruit pieces which may comprise: hard fruits (e.g. nuts such as hazelnuts, almonds, brazil nuts, cashew nuts, peanuts, pecans and/or similar); soft fruits (e.g. raisins, cranberries, blueberries, blackcurrant, apples, pear, orange, apricot and/or similar); and/or freeze-dried fruit pieces, candied fruit and/or alcohol-soaked fruit, preferred soft fruits are dried fruits;

crispy inclusions (e.g. caramel, coffee, biscuits, wafer, etc.);

herbs (for example chives, dill, coriander, parsley);

cereals (for example puffed rice, puffed wheat, extruded cereal pieces),

chocolate or choco material (for example chocolate vermicelli, chocolate shapes);

sugar confectionery (for example cinder toffee pieces, marshmallow, sugar-panned centres such as those available commercially from Nestlé under the trade mark mini SMARTIES®) and/or

any suitable mixtures and/or combinations thereof.

It will be appreciated that an inclusion may fall into more than one of the above categories listed above.

In one embodiment of the invention the inclusions selected are a mixture of a plurality of different inclusions, where each inclusion has a similar density (usefully within 20%, more usefully ±10%, most usefully ±5% of the average density of the mixture) so the density range of the inclusion mixture is narrow, more preferably the density of each inclusion is substantially the same.

In another embodiment of the invention the inclusions selected are the same and not a mixture of different inclusions so the density of the inclusions are substantially the same.

The present invention further relates to a confectionery product, for example a chocolate product such as a chocolate tablet and/or chocolate bar, filled with an aerated filling of the invention and having dispersed therein (optionally visible) inclusions provided by a method described-herein. If the filling is enclosed within an opaque outer shell the inclusions will not be visible under the product is eaten.

In general the terms 'product' and 'composition' (such as 'confectionery composition' and 'confectionery product') may be used interchangeably herein unless the context clearly indicates otherwise, the difference between them being generally that a product is in a final or almost final form ready or acceptable to be commercialized and eaten by an end consumer and is typically sold under a brand name. Thus a product may have a plurality of different domains and textures of which a composition may comprise only one part. A composition (which may also be a product) may also be a component and/or ingredient used to prepare a product.

Preferably, the confectionery composition and/or product of and/or used in the present invention that comprises inclusions may comprise from 1 to 70%, more preferable from 1 to 20% and even more preferably from 2 and 15%, by weight of inclusions with respect to the weight of the composition and/or product being 100% by weight.

In one embodiment of the invention confectionery products comprise an aerated choco-material such as compound or chocolate.

In another embodiment of the invention comprises a filled confectionery product, that comprises from 20 to 70% by weight of the product of an aerated compostion of the invention (preferably an aerated filling). Optionally the remainder of the product being a shell of choco-material such as compound or chocolate that substantially encloses (preferably completely encloses) the product. Even more preferably in the filled pralines of the inventions the aerated filling comprises from 1 to 70% by weight (with respect to the weight of filling) of inclusions homogenously dispersed therein.

In yet other embodiment of the invention comprises a filled confectionery product such as a praline, that comprises from 20 to 40%, more preferably from 25 to 35%, most preferably about 30% by weight of the product of an aerated filling of the invention optionally with 1 to 70% by weight of the filling of inclusions homogenously dispersed therein.

In still other embodiment of the invention comprises a filled confectionery product such as a filled chocolate tablet or bar, that comprises from 50 to 70%, more preferably from 55 to 65%, most preferably about 60% by weight of the product of an aerated filling of the invention optionally with inclusions homogenously dispersed therein.

Usefully the confectionery product of the invention comprises a choco-material such as chocolate or compound, more usefully chocolate, most usefully dark and/or milk chocolate, for example milk chocolate such as a moulded milk chocolate tablet (optionally with inclusions and/or fillings therein).

In one other embodiment of the invention the aerated food composition (and/or confectionery product comprising that composition) comprises inclusions that are dispersed therein following a pre-determined pattern which may or may not be homogenous. The process of the invention provides a means (e.g. by timing of when inclusions are added to the composition during deposition) to set an initial pattern if distribution of inclusions in a fluid composition which will be substantially retained in the final product.

Thus for example the inclusions may be arranged visible within or at the surface of a product such as chocolate product, *i.e.* that at least a portion of the inclusion facing to an external surface of the product is not covered with material, but is visible for a consumer. The inclusions are visible on the profiled side of the product which is opposed to the flat bottom side and so if the product is made in a mould the inclusions would be patterned at the bottom of the mould.

Homogenous distribution

In a further embodiment of the invention the aerated food composition (and/or confectionery product comprising that composition) comprises inclusions that are substantially homogeneously dispersed within that aerated composition.

Whether inclusions are substantially homogenously dispersed with the aerated filling will be readily apparent from a visible inspection (for example of a cross-section of the product if the filling is fully enclosed). There has been a problem in the prior art that when large amounts of inclusions and/or large inclusions are added to known aerated compositions, the inclusions sink to the bottom of the filling as they are unable to be supported in place within the aerated filling which has insufficient structure to prevent or mitigate movement of inclusions within the filling which migrate under gravity due to their own weight. Therefore it is an object of one aspect of one embodiment of the present invention to provide aerated fillings with inclusions that are dispersed evenly from top to bottom over the height of the filling and/or remain within substantially the same horizontal plane within the middle of the filling. Thus in aerated fillings of the present invention the inclusions do not (or have reduced tendency to) to clump at the bottom of the filling.

It will also be understood that the terms top and bottom referring to a product may be interchangeable and depend for example how the product is formed and its orientation under gravity. Thus for example the top of a product in use or when packed may be the bottom of the product when formed in a mould during production. The term 'substantially horizontal' refers to a plane through an axis of the product which during storage, transport and display of the product in store is likely to be held substantially horizontal, e.g. where the product is stored flat on a largely (preferably exactly) horizontal surface. A substantially horizontal surface is typically parallel to the major plane of the product, for example the flat bottom side of large area of a filled chocolate tablet. As used herein 'substantially vertical' refers to lines or planes which are substantially perpendicular (preferably perpendicular) to a substantially horizontal (preferably exactly horizontal) line or plane as defined herein. Preferred substantially vertical orientation is vertical, especially aligned with the direction of gravity in the typical position of the product in storage, transport and/or display.

Thus the exact definition of homogeneity will depend on the product size and shape (and filling component thereof) and the amount and quantity of inclusions relative to the amount of aerated filling, but whatever definition is used, it is strongly preferred that the aerated fillings with inclusions avoid clumping of the inclusions at the periphery of the filling.

In one embodiment of the invention the term substantially homogeneous is used to denote that the inclusions are substantially equally and evenly dispersed within the height of an aerated filling of the invention such height measured along a substantially vertical plane within a confectionery product such that the inclusions are not disproportionally located at the bottom or top end of said plane, preferably are substantially evenly distributed along it.

In a yet other embodiment of the invention the term substantially homogeneous is used to denote that the inclusions are substantially equally and evenly dispersed within the aerated filling (especially within the height thereof) when within a confectionery product such that the inclusions have a normal distribution of linear spaces between them and one standard deviation of these spaces is no more than 10% the linear length of any dimension of the product or filling component there within, preferably such distribution being measured across a substantially vertical plane.

In another embodiment of the invention the tern substantially homogeneous may be used instead or as well as the previous definition to denotes a measure of homogeneity defined by a homogeneity index that measures how uniformly the inclusions are distributed within the composition, being especially suitable for use with large amounts of small sized inclusions.

The homogeneity index may be determined by taking an image (from X-ray tomography and/or CLSM) and measuring the number of inclusions that intersect along at least 3 parallel horizontal lines of equal length (preferably at least 10 cm) located on the image to be equally spaced from each other and the image edges. The ratio of the minimum number of inclusions on one of these lines to the maximum number of inclusions on one of these lines can be defined as a number homogenous distribution index (NHDI) which for aerated fillings of the invention may be at least 0.4, preferably greater than or equal to 0.5, more preferably greater than or equal to 0.6, most preferably ≥ 0.7.

In another alternative or cumulative embodiment of the invention the homogeneity index that measures how uniformly the inclusions are distributed may be determined by taking an image (from X-ray tomography and/or CLSM) and measuring along each of at least 3 parallel horizontal lines of equal length (preferably at least 1 cm) located on the image to be equally spaced from each other and the image edges, the length of each line that lies inside the inclusion. The ratio of the minimum length on one of these lines to the maximum length on one of these lines can be defined as inclusion length homogenous distribution index (ILHDI) which may be at least 0.4, preferably greater than or equal to 0.5, more preferably greater than or equal to 0.6, most preferably ≥ 0.7.

Homogeneity index is measured on a sufficiently large volume of sample that is appropriate for the size and concentration of inclusions that are present. Thus for example some bigger inclusions (such as blueberries) may be added to the composition at a dosing ratio of 5% in the filling by weight (corresponds to approximately 8 fruit pieces in 80g serving of filling which is approximately the amount present in one filled tablet, so a much larger quantity of filling and/or sample size of products would be needed to measure homogeneity using either measure described herein.

Homogeneity index may also be used to measure the homogeneity of the bubbles within the aerated composition and in a preferred embodiment, the bubbles may also be distributed homogenously with a NHDI and/or LHDI which may be at least 0.8, preferably greater than or equal to 0.85, more preferably greater than or equal to 0.9.

The applicant has also found that in a preferred embodiment of the present invention the aeration of the composition used in the process of the invention is controlled during the process of aerating such that the gas flow rate remains substantially within a range to achieve a desired target porosity in the final micro-aerated chocolate which matches the inclusion(s) that are added. Such control may be manual or automatic, for example using sensors to automatically adjust gas flow rate of the gas depositor in responses to changes in the process (for example changes in throughput of choco-material) and may be operated by a computer controlled apparatus and/or using a feedback loop.

Alternatively in another embodiment control of density can be achieved by determining in advance of and/or once during a process one optimal control parameter (or one set of control parameters) for the aerating means that will be used in that process and setting the aerating means at that parameter (or single set of parameters) before the process starts and/or operating the aerating means at that parameter (or set of parameters) throughout the process. Determining the control parameter(s) can be a manual calculation; use a computer; use one or more sensing means; and/or use another suitable measurement or parameter. The advantage of this embodiment is simplicity and lack of expense as no new equipment, sensors or control means need to be added to an existing apparatus. In this embodiment by following the process of the invention an operator can simply set up a (optionally conventional) aerating apparatus to density match the inclusions that will be added and start the process without intervening further as the process proceeds.

Preferably the gas bubbles are produced in the aerated compositions of the invention using an aerating means comprising a machine selected from one or more of the following and/or components thereof:

(i) a rotor stator mixer;
(ii) a gas injector where the gas is injected into an (optionally high pressure) fluid at an injection site at a pressure higher than atmospheric pressure and lower than the fluid pressure and;
(iii) a jet depositor for depositing fluid onto a substrate under positive pressure; and/or
(iv) a modular mixing head with a plurality of different sets of rotor stators.

Each of these aerating machines (i) to (iv) are described more fully herein.

The rotor stator mixer may comprise at least one rotor state mixing head such as those rotor stators available commercially from Haas under the trade designation Mondomix®.

The gas injector may be injected into a fluid where preferably the fluid has an operating pressure of from 2 to 30 bar. The fluid may be transported by at least two pumps (optionally capable of being operated at pressures from 2 to 30 bar) to pass an injection site being located between said pumps. Advantageously by injecting gas between two pumps the pressure at the injection site may be lower than and/or shielded from the pressure in the rest of the apparatus. Inert gas may be dispersed into the fluid by injection at the injection site at high gas pressure (greater than atmospheric pressure). More usefully at gas pressure at the injection site may be less than or equal to 9 bar and/or the system pressure may be at least 9 bar after the injection site. Most usefully suitable gas injectors may comprise those gas injectors made by and on behalf of the applicant under the trade designation Novac™, which gas injectors are defined herein and/or are described in WO2005/063036.

As used herein the term 'jet depositor' refers to an apparatus for depositing a fluid food product (e.g. a liquid, semi-liquid or semi -solid food) under positive pressure (i.e. pressure above ambient pressure). A preferred jet depositor (also referred to herein as Jet Depositor) comprises a reciprocating valve spindle to deposit the food and/or is as described in the applicant's patent application WO2010/102716.

Usefully in the process of the invention the composition is pumped by at least two pumps to pass an injection site being located between said pumps, where the inert gas is dispersed into the composition by injection at the injection site at high gas pressure, more usefully the gas pressure being greater than or equal to 9 bar.

A modular mixing head may conveniently comprise a plurality, more conveniently at least three, most conveniently three different sets of rotor stators, for example those modular mixers available commercially and/or used by the applicant under the trade designation Nestwhipper™.

More preferably the aerating means used herein comprises a Novac™ injector and/or a jet depositor; even more preferably a Novac™ injector, most preferably where the gas is injected into the composition in between two pumps, usefully at a pressure of from 2 to 30 bar, more usefully from 4 to 15 bar, even more usefully from 6 to 12 bar, most usefully from 8 to 11 bar, for example 9 bar or 10 bar.

For preparing the micro-aerated choco-material of and/or used in of the present invention gas injectors such as the Novac™ injectors offers several advantages. Firstly the gas injection is effectively isolated from any pressure fluctuations occurring in the rest of the system. This gives a more stable gas flow into the product. Secondly injectors such as Novac™ injectors can optionally operate at higher pressures compared to conventional rotor stator systems (9 bar is a typical operating pressure for a Novac™ injector compared to 6 bar typical operating pressure for a mixer using a rotor stator mixing head such as a Mondomix® mixer). When a gas injector is attached to a jet depositor, this is additionally useful as higher flow rates can be delivered with consequent faster line speeds. Thirdly the whole system is fully pressurized up to the point of deposit. This results in significant advantages described herein such as optimising final aeration quality and reducing the opportunity for bubble coalescence.

In one preferred embodiment of the present invention it was found that the two process parameters that impacted porosity and aeration quality to be most extent were gas flow and temperature. The control of other parameters in the aeration process was found to have little or no effect. Without wishing to be bound by any theory the applicant believes that when producing micro-aerated chocolate the crystallisation of the fat is the main factor which holds the aerated structure. Micro-aerated chocolate is also stable over time.

Other preferred values of these parameters are described below.

Conveniently in step (a) the gas is dispersed into a molten choco-material at a mass flow rate of from 0.6 to 12 kg / min; more conveniently from 1.2 to 9 kg / min; most conveniently from 2.4 to 6 kg / min.

Usefully when the choco-material is chocolate and/or compound in step (a) the gas is dispersed into the composition when the composition is at a temperature of from 28 to 33°C, more usefully from 30 to 32°C, most preferably 31°C.

Preferred porosities to be matched to typical inclusions are from 10 to 19% by volume of the composition.

Broadly in a yet other aspect of the present invention provides a product obtained and/or obtainable by a process of the invention as described herein. Preferred products of the invention comprises inclusions dispersed in a pre-determined pattern in a solid material for which the fluid composition is a precursor. Usefully products of the invention comprise a pre-determined pattern of inclusions therein, more usefully comprise a substantially homogenous dispersion within the solid material. Conveniently products of the invention are a moulded product.

In a still other aspect of the invention there is provide a control device suitable for use in conjunction with at least one of: a process of the invention an apparatus of the invention; and/or a further apparatus capable of being used in at least one step of a process of the invention; where the further apparatus comprises: at least one (optionally aerating) means for adjusting the density of a fluid composition; and at least one sensing means associated with the apparatus to generate at least one input parameter therefrom to general at least one control parameter to control the aerating means;

where the control device comprises at least one unit separate and/or separable from the apparatus of the invention and/or the further apparatus; the control device characterized by comprising:

at least one input interface capable of being connected with the at least one sensing means to receive at least one input parameter therefrom; and at least one output interface capable of being connected with the at least one density adjusting means to send at least one control parameter thereto; where during operation of the process of the invention; apparatus of the invention and/or the further apparatus, the control device is capable of:

receiving via the at least one input interface the at least one input parameter from the at least one sensing means; using the at least one input parameter to calculate the at least one control parameter; and transmitting the at least one control parameter via the at least one output interface to the at least one density adjusting means to control the density of the fluid to substantially match the density of the inclusions according to the process of the invention.

In preferred control devices and/or apparatus of and/or used in the invention the density adjusting means is an aerating means selected from those described herein.

In one embodiment of the control device of the invention the input and/or output interfaces may comprise a physical connection between the control device and one or more of the respective sensor means and/or aerating means for example via direct mechanical links and/or electrical cables thereto.

In another embodiment of the control device of the invention the input and/or output interfaces may comprise a remote connection (for example wireless, infrared and/or web based interface) where there is no physical connected between the control device and one or more of the respective sensor means and/or aerating means.

In a preferred embodiment of the control device of the invention, the control device is a single unit (e.g. held in one box) which may be wired to and/or may be a remote control for the apparatus of and/or used in the process of the invention. The control device may optionally comprise the at least one sensor which may be associated with the process of the invention and/or the apparatus of and/or used in the invention. Alternatively the control device of the invention may be absent sensors and connect (via the at least one input interface) with sensors that are already present on and/or are associated with the apparatus of and/or used in the invention. Usefully the control device of the invention may comprise solid state hardware (such as integrated circuits and/or microprocessors) having algorithms integral thereto (as hardware, software and/or firmware) such that the control unit can perform as described herein by receiving at least one input parameter and transmitting at least one suitable control parameter.

A still yet other aspect of the present invention provides use of a control device of the invention for the purpose of controlling density in a process of the present invention. Preferably the control devices of the invention are used in conjunction with an apparatus of the invention. However alternatively or as well the control devices of the invention may be used in conjunction with an apparatus suitable for use in a process of the present invention, which may be already known (such as a known aerator and/or depositor or the like), and more preferably the control device can then be used to operate and/or control such known apparatus in a more optimal manner than was done before.

A still yet other aspect of the present invention provides a method for modifying an apparatus comprising an aerating means capable of modifying the density of an edible fluid composition and/or density of inclusions mixed therewith so the densities substantially match, the method comprising the steps of:

a) providing a control device of the invention; b) optionally adding sensing means to the apparatus of and/or used in the process of the invention; and c) associating the control device to operate the aerating means to modify the density of the fluid and/or to operate the inclusion receiving means so operating the control device is capable of substantially matching the density of the fluid and the density of the inclusions.

Preferably in step (c) of the method the process referred to is a process of the present invention.

Usefully in step (c) of the method the process uses input parameters from the sensing means to generate control parameters for the aerating means.

Conveniently after modification in accordance with the method of the invention the apparatus comprises an apparatus of the invention, more conveniently this being due to the modification for example where the apparatus before modification is known such as conventional aerator or depositor.

Alternatively the apparatus before modification already comprises an apparatus of the invention already suitable for use in a process of the invention in which case the method is used to provide improvements in the apparatus of the invention e.g. providing better capability with and/or ease of use in the process of the invention.

Further aspects, embodiments and/or elements of the invention are provided in the claims herein which are incorporated in the description by reference.

Description of the Drawings

Embodiments are described, by way of example only, with reference to the accompanying drawings, which are described below.

Figure 1 is a photograph showing use of the nozzle referred to herein as Nozzle 1 from which aerated chocolate is deposited showing a steady vertical flow of a stream of the aerated chocolate as it falls.

Figure 2 is a photograph of a cross-section through a prior art moulded chocolate bar without inclusions that was obtained by the depositing micro-aerated chocolate into a mould by the chocolate stream from Nozzle 1, to show the aeration quality without inclusions as a point of comparison.

Figure 3 is a photograph of a cross-section through a moulded chocolate bar with inclusions that was obtained from Nozzle 1 where most of the larger visible air pockets in this bar correspond to the position of one of the inclusions.

Figure 4 is a photograph showing the flow of chocolate mass from the nozzle referred to herein as Nozzle 2.

Figure 5 is a photograph of a cross-section through a prior art moulded chocolate bar without inclusions that was obtained by the depositing micro-aerated chocolate into a mould by the chocolate stream from Nozzle 2, to show the aeration quality without inclusions as a point of comparison.

Figure 6 is a photograph of a cross-section through a moulded chocolate bar with inclusions that was obtained from Nozzle 2, where the presence of visible bubbles due to coalescence can be seen and also that this sample was very slightly darker than the corresponding sample produced using Nozzle 1 (shown in Figure 3).

Figure 7 is a photograph of the back of the chocolate bars produced by depositing a chocolate mass together with inclusions from Nozzle 2, showing an even distribution of inclusions across all bars.

Figure 8 is a photograph of de-moulded bars produced with Nozzle 2 where some large air bubbles are visible on the surface of the bars.

Figure 9 is a photograph of deposition of aerated chocolate using Nozzle B.

Figure 10 is a photograph of chocolate deposited by Nozzle 3 showing the uneven deposits and tailing.

Figure 11 is a photograph of a cross section of a moulded aerated chocolate without inclusions deposited by Nozzle 3 that showing the micro-aeration quality was poor as some visible bubbles are clearly present.

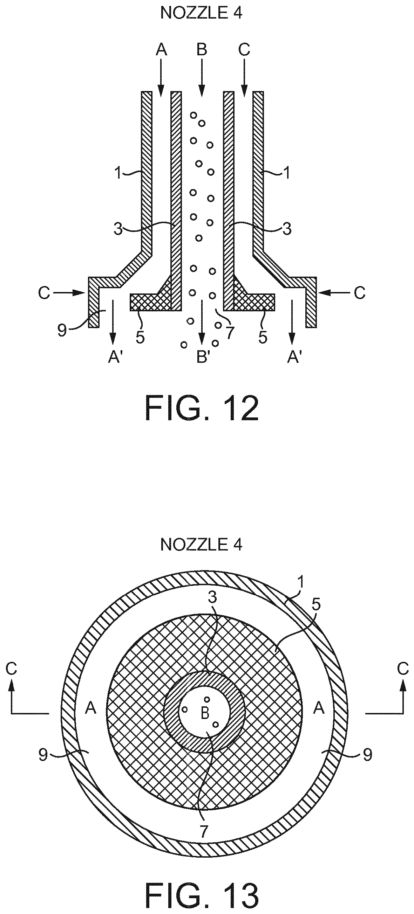

Figure 12 is a schematic cross-sectional view of one embodiment of an nozzle (Nozzle 4) for use with apparatus of the invention showing an annular orifice and an inner and an outer conduit for use in an apparatus for depositing a liquid, semi-liquid or semi-solid food aerated composition together with inclusions, where the orifice is fluidly connected to an outer of two conduits the aerated composition passing through the outer conduit in the direction indicated by arrows A to A' from a respective proximal to distal end; and where inclusions are passing through an inner conduit in the direction indicated by arrows B and B' also from a respective proximal to distal end.

Figure 13 is a plan view of Nozzle 4 shown in Figure 12 viewed from the proximal end (from above) shown in cross-section along the plane indicated by line C to C;

Figure 14 is a schematic cross-sectional view of another embodiment of an nozzle (Nozzle 5) for use in the invention (similar to the Nozzle 4 of Figures 12 and 13) with a frusto conical deflector (105) partly defining the outer conduit through which the aerated composition may flow.

Figure 15 is a plan view of Nozzle 5 viewed from the proximal end (from above) shown in cross-section along the plane indicated by line D to D.

Figures 16 to 18 are of another embodiment of a nozzle (Nozzle 6) for use in the invention.

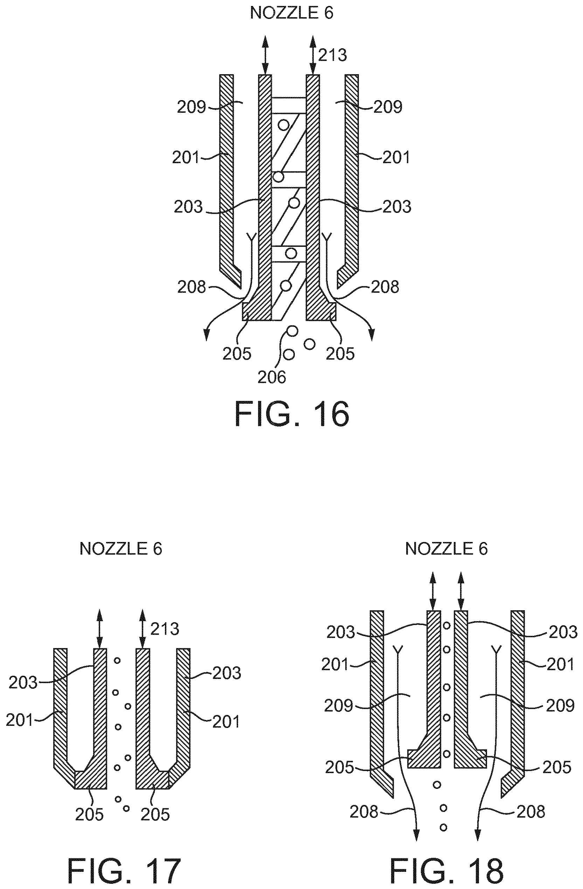

Figure 16 shows a cross section of Nozzle 6 in an up, open position.

Figure 17 shows a cross section of Nozzle 6 in a middle closed position.

Figure 18 shows a cross section of Nozzle 6 in a down, also open position.

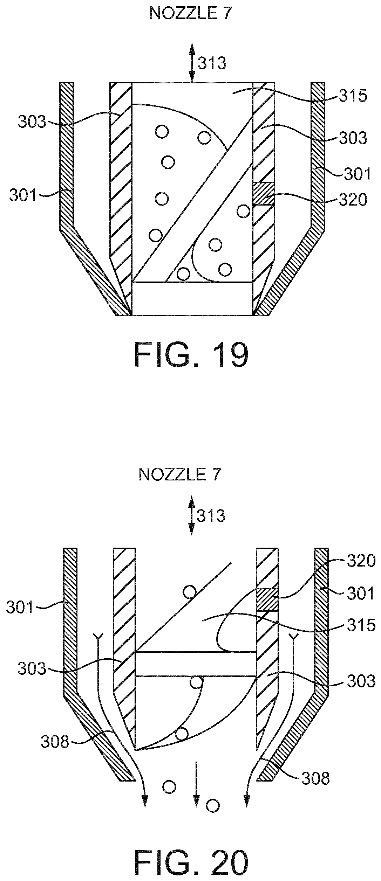

Figures 19 to 20 are of yet other embodiment of a nozzle (Nozzle 7) for use in the invention having a screw to deliver the inclusions through the inner conduit of the invention where:

> Figure 19 shows a cross section of Nozzle 7 in closed position.
> Figure 20 shows a cross section of Nozzle 7 in an up, open position.

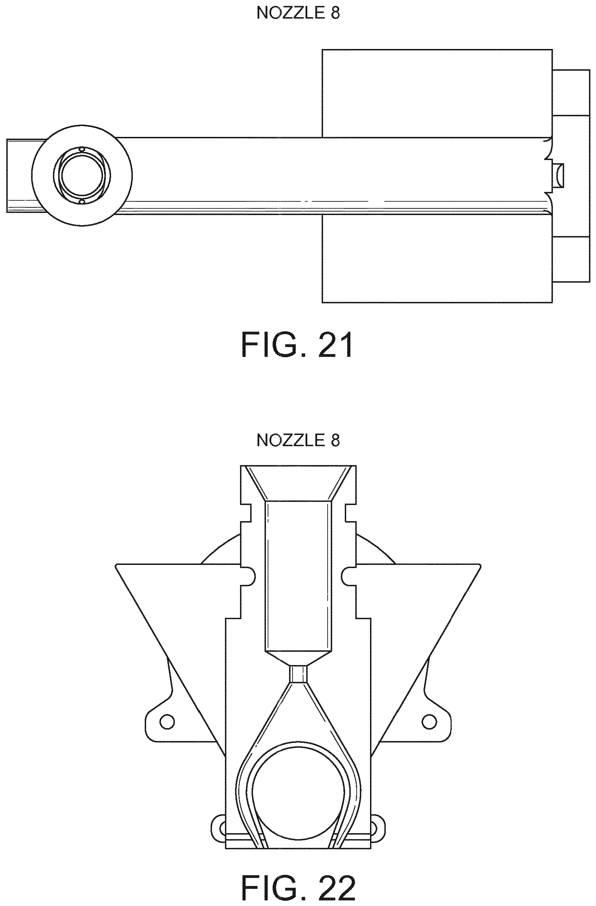

Figures 21 & 22 illustrate still other embodiment Nozzles 8 for use in the present invention.

Figure 21 shows part of the geometry of the base of Nozzle 8.

Figure 22 shows part of the geometry of the end section of Nozzle 8.

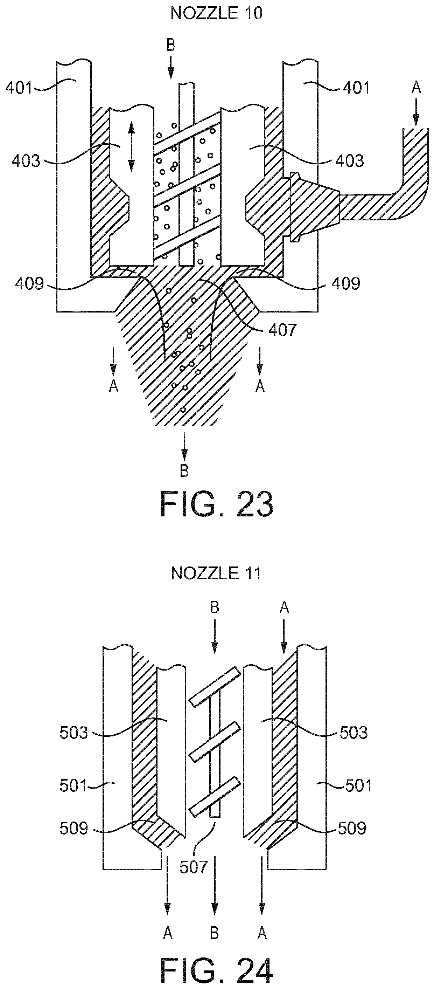

Figure 23 shows in cross section of another embodiment of the invention Nozzle 9 with a central bore containing a screw feeder for the inclusions and where the chocolate mass enters the apparatus from a conduit orthogonal to the axis of the nozzle.

Figure 24 shows in cross section of another embodiment of the invention Nozzle 10 in which there is a central bore containing screw feeder for the inclusions movable along the main axis of the bore relative to the outer conduit through which the chocolate flows towards the exit orifice, where the respective surfaces of the annular ends of the central bore walls and the annular ends of the walls of the outer conduit are shaped at an angular to the main bore axis so that in one (closed) position of the central bore the surfaces faces can abut each other face to face to form a seal and thus close the outer orifice and prevent chocolate flow there through.

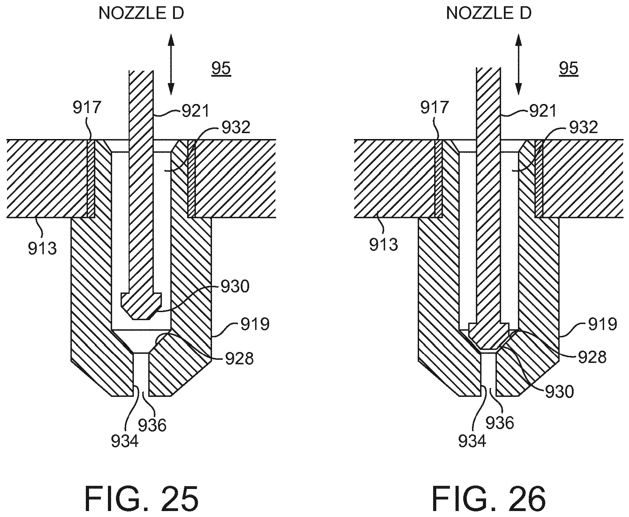

Figures 25 & 26 shows schematically cross sections through a conventional nozzle (Nozzle D) that may be used to deposit chocolate (without inclusions) for example in conjunction with a prior art depositor such as that described in WO2010/102716.

Figure 25 shows a cross section of Nozzle D in an up, open position.

Figure 26 shows a cross section of Nozzle D in a down, closed position.

Generally to number elements shown in the Figures herein, unless the context clearly indicates otherwise, the same, similar or analogous elements are given the same numbers as labels separated by integral (or no) multiples of hundred and so the purpose of each element need not be described repeatedly herein but can be inferred by analogy.

## EMBODIMENTS OF THE INVENTION

Although particular embodiments are described herein, it will be appreciated that the claimed subject matter is not limited to the specific embodiments described, and that alternative configurations are possible within the scope of the appended claims.

In the embodiments and examples described herein may be used in conjunction with any suitable apparatus for depositing and/or aerating an edible fluid (such as liquid, semi-liquid or semi-solid food product) with for example the nozzles of the invention as described herein. The problem of adding inclusions is not specific to a particular type of apparatus for depositing or aerating chocolate, but is experienced with different machines for depositing other food products, whether aerated or not. Examples of apparatus for depositing a liquid, semi-liquid or semi-solid food product that may be used in a process of the invention are described below.

An example of a suitable depositing apparatus is described in WO 2010/102716. The example apparatus comprises a fixed volume chamber for receiving the food product under a positive pressure, the chamber being defined by chamber walls, one of the chamber walls being provided with an outlet orifice for depositing the food product, the outlet orifice being provided with a first sealing surface. The apparatus also comprises a valve spindle arranged for reciprocating movement within the chamber, the length direction of the valve spindle extending substantially perpendicular to the chamber wall in which the outlet orifice is provided, a first end of the valve spindle being provided with a second sealing surface. The second sealing surface of the valve spindle is arranged for abutting the first sealing surface of the outlet orifice to thereby close the outlet orifice. This apparatus may be used in a process and/or comprise part of an apparatus of the present invention and/or be operated in line with an apparatus of the present invention to provide the fluid composition to the outer orifice of a nozzle of the invention as described herein.

Examples of a suitable aerating apparatus (aerator) have already been described above. It will be seen that any of these or other known depositors and/or aerators may perform the steps of deposition and/or aeration of a fluid composition (such as chocolate) either in separate steps (e.g. aeration occurring via gas injection before deposition) when typically these functions are performed by separate pieces of equipment or together (e.g. aeration occurring via gas injection immediately prior to deposition) when typically the aerator and depositor are the same piece of equipment.

In either case known apparatus (either one or several pieces of equipment) can be modified as described herein (e.g. by addition of at least one nozzle as described herein) to form an apparatus of the invention which can be used in a process of the invention to deposit aerated fluids such as aerated chocolate in conjunction with inclusions.

Figures 25 and 26 (Schematic conventional Nozzle D)

As a comparison, Figures 25 and 26 provide an enlarged view of a conventional Nozzle D (919) which is typical of a nozzle used to deposit optionally aerated chocolate under high pressure. Nozzle D would be unsuitable for use with compositions having inclusions therein as these would be trapped inside the nozzle which would rapidly be blocked. Turbulent mixing of inclusions within the chocolate during deposition with Nozzle D would also destabilize the chocolate causing it to deaerate.

The Figures 25 and 26 show an interaction between an internal conical surface (928) of Nozzle D which forms a first sealing surface and a conical surface (930) provided at the end of the vale spindle (921), which forms a second sealing surface. Nozzle D has a generally cylindrical configuration. In the example shown in Figures 25 and 26, an external screw thread (919) on Nozzle D is screwed into an internal screw thread in an aperture (917) in the bottom plate (913) of the apparatus (91). A valve-receiving bore (932) in Nozzle D is open to the chamber (95) within the apparatus (91). The valve-receiving bore (932) is connected to an outlet bore (934) of a smaller diameter via the internal conical surface (928). The outlet bore (934), which has a constant cross-section and diameter, ends at the outlet (936) from Nozzle D. The valve spindle (921) reciprocates between a first (open) position as shown in Figure 25 and a second (closed) position shown in Figure 26. In the open position illustrated in Figure 25, the conical surface (930) of the valve spindle (921) is spaced from the internal conical surface (928) of Nozzle D so that the chamber (95) is connected via the valve-receiving bore (932) and the outlet bore (934) to the outlet (936) of the nozzle, whereby the food product in the chamber (95) can flow under pressure past the conical surfaces (928) and (930) to be deposited from the outlet (928) of Nozzle D (919). In the closed position shown in Figure 27, the conical surface (930) of the valve spindle is in contact with the internal conical surface (928) of the nozzle to block the connection between the valve-receiving bore (932) and the outlet bore (934), whereby the food product in the chamber (95) cannot flow past the conical surfaces (928) and (930) to be deposited from the outlet (928) of Nozzle D (919). As for the nozzles of and/or used in the present invention, the dimensions of Nozzle D vary depending upon various parameters including the composition of the food product and/or the gas used for aeration, the pressure under which the product is kept in the chamber (95) and the desired rate of deposition.

As discussed, when inclusions are incorporated with a fluid aerated food product either before or during aeration mixing between the fluid and solid inclusions can cause the aerated fluid to de-aerate and/or the gas injection or depositor orifices to be blocked in the aerator which is undesirable. An embodiment of a nozzle as claimed and/or described herein (such as any of Nozzles 1 to 10) seeks to eliminate or at least mitigate the problems described herein and can be used instead of a conventional nozzle such as Nozzle D.

Depositor

The example apparatus for depositing a liquid, semi-liquid or semi-solid food product comprises a fixed volume chamber for receiving the food product under a positive pressure in the range of 4 to 12 bars, for example 4 to 6 bars, optionally such food product having already been aerated (e.g. by gas injection or mixing) before being transported to the chamber. The chamber may optionally further comprise an aerating means (e.g. means to inject gas into the liquid optionally under high pressure) to aerate or further aeration the liquid content.

This apparatus is also referred to herein as a depositor and in a depositor of the present invention (which may optionally also be an aerator) comprises at least one nozzle of and/or capable of being used in a process of the present invention in conjunction with one or more of the other apparatus features described below.

In the example depositor the chamber is provided with an inlet and an outlet for supplying the food product to the chamber from a pump and suitable pumps and supply lines will be apparent to those skilled in the art. The pump is configured to supply the food product to the chamber at a rate of, for example, approximately 125% of the intended depositing rate.

Side walls of the chamber may be are provided as a unitary body formed of, for example, a stainless steel casting. Bottom and top walls of the chamber, which are substantially flat, may be formed of, for example, stainless steel plates bolted and sealed to the side walls. The bottom wall of the chamber may be provided with a plurality of apertures having a two dimensional arrangement for producing a desired depositing pattern, for example a two dimensional arrangement of apertures may be provided in a regular row and column array of say 64 apertures. Other arrangements are, however, possible. A nozzle is fitted into each of the apertures and defines an outlet orifice through which the food product is deposited. An inside surface of the nozzle may be provided with a conical surface, which surface serves as a first sealing surface. The apparatus may also comprises a plurality of valve spindles associated with respective outlet orifices and a plurality of linear pneumatic actuators associated with respective valve spindles.

Each valve spindle may be in the form of an elongate circular rod, or needle. A first (lower) end of the spindle may be provided with a conical surface which serves as a second sealing surface and is adapted for making sealing contact with the first sealing surface of a respective nozzle, as described above. The valve spindle may have a length slightly less than the internal height of the chamber (measured across the inner surfaces of the bottom and top plates of the chamber). A second (upper) end of the valve spindle may be attached to a respective actuator which is itself attached to the top plate of the chamber. The actuator may be attached to the top plate of the chamber such that it can be accessed for repair or replacement without significant disassembly of the apparatus.

The actuators and valve spindles may be arranged with their axes perpendicular to the bottom and top plates such that the actuators can be operated to longitudinally displace the valve spindles relative to the chamber walls with reciprocating movement. The valve spindles may be arranged such that, with the valve spindles in their upper position, the outlet orifices are open so the food product is deposited. With the valve spindles in their lower position, the sealing surfaces of the nozzle components and the valve spindles may be in sealing contact to thereby close the outlet orifices and prevent the flow of the food product.

The actuators may be operated independently so that the flow of food product can be varied between different outlet orifices, with a selectable number of the outlet orifices being open at any one time.

The actuators may be each connected to a pneumatic circuit (not shown) for providing linear movement and a controller (not shown) for controlling the pneumatic circuits. Suitable pneumatic circuits will be known to those skilled in the art. Suitable controllers include programmable logic controllers (PLCs) and suitably programmed computers.

In use of the apparatus the controller may be arranged to control the actuators to independently open and close the respective outlet orifices for starting and stopping the deposition of the food product. The flow rate of the food product through the outlet orifices may be controlled by opening and closing the outlet orifices in a cycle having a frequency of at least 2 Hz, and by varying the proportion of the cycle time in which the outlet orifice is open (i.e. varying the mark-space ratio).

The flow rate of the food product through the outlet orifices may also depend, at least in part, on the pressure of the food product in the chamber. The controller may therefore be provided with the output from a pressure sensor (not shown), which measures the pressure in the chamber. The controller may control the actuators based on the sensed pressure.

Rather than pneumatic actuators, the actuators may alternatively be other types of actuator, such as moving coil electrical actuators. Moving coil electrical actuators may be capable of accurate positional control so that the flow rate of the food product through the outlet orifices can be varied by adjusting the linear position of the valve spindles.

The apparatus may be provided with a spreader plate attached to the bottom plate. The spreader plate may connect the outlet orifices to a larger plurality of spreader plate outlets. The spreader plate outlets may be provided with a pressure operated valve, the pressure operated valve being arranged to close when a pressure drops below a predetermined pressure greater than atmospheric pressure.

The apparatus may be arranged in an intermittent motion (indexed) food product moulding line. When the line is stationary, the apparatus may be moved over a mould cavity at high speed to fill the mould cavity with the food product.

A conventional depositor as described above may be modified to be used to simultaneously deposit inclusions and aerated compositions as described herein. Such modification may comprise use of at least one nozzle as described herein have two conduits therein one for the fluid composition and another for the inclusions. The depositor may also comprise a second chamber for holding inclusions before they are deposited through the inner conduit.

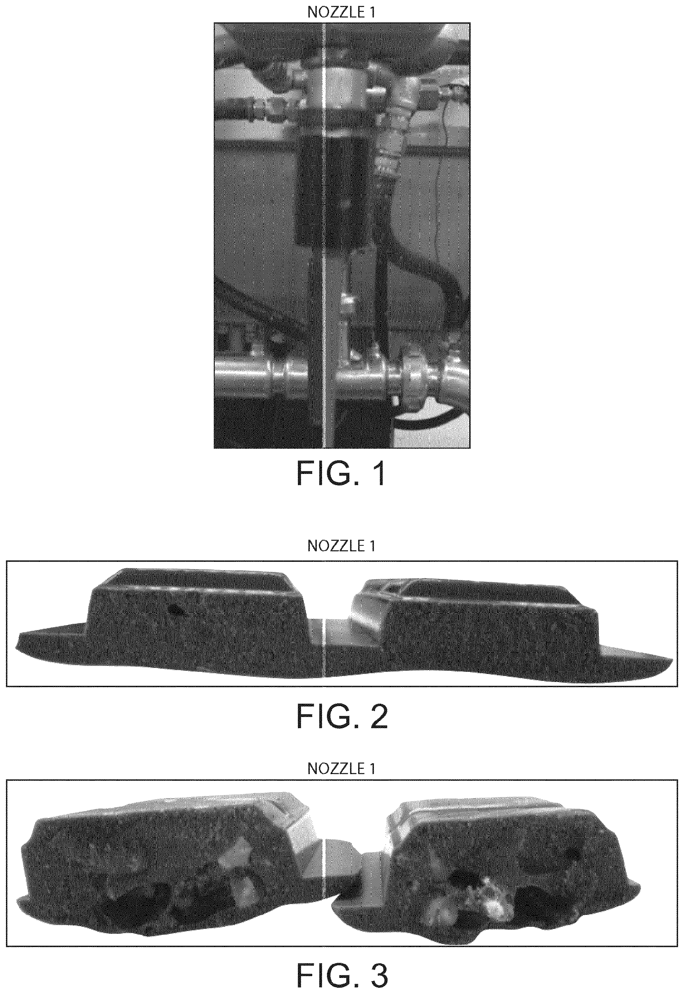

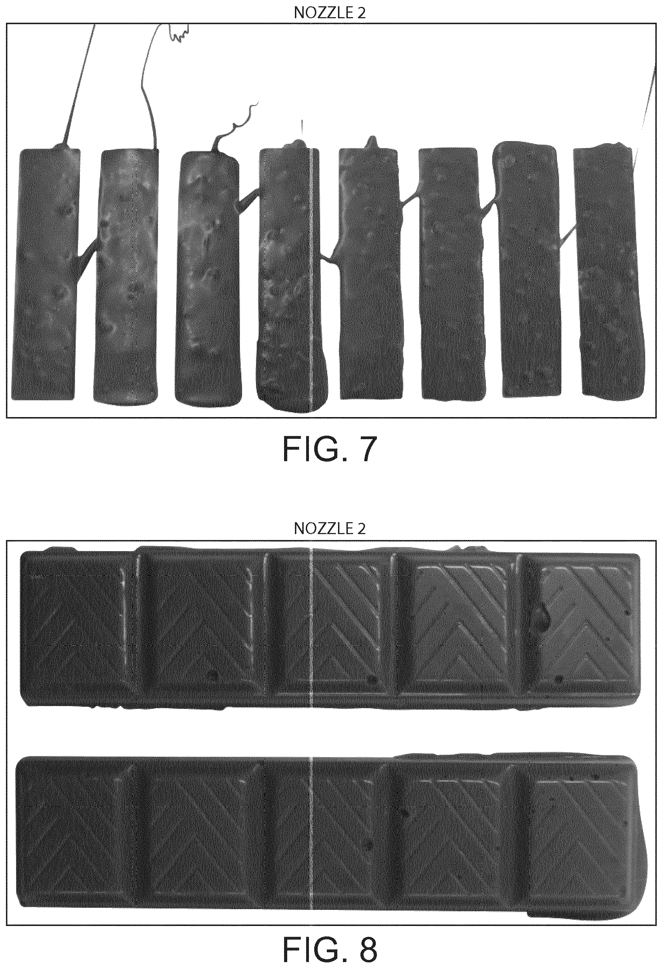

Figures 1 to 26 herein illustrates certain examples of prior art nozzles and/or nozzles of the invention (such as Nozzles 1 to 10), that may be used in a process of the invention as claimed herein and/or that are suitable for use with an apparatus as described and/or claimed herein (such as a depositor as described above) for example with reference to the Figures herein. It will be appreciated that a valve spindle (not necessarily shown in any of the Figures 1 to 26 herein) may optionally be used in conjunction with any nozzle of the invention (such as Nozzles 4 to 10 illustrated herein). The length of the spindle can be adjusted to suit the nozzle that is used and thus for example Nozzles 1 to 10 (which are non- limiting) do not have to have the same length. Although embodiments of a nozzle of and/or used in the invention described herein that could be used with the apparatus described herein and/or illustrated herein, other embodiments of a nozzle as claimed herein could be used with other apparatus. Accordingly, an embodiment of a nozzle as claimed herein could have other forms and other dimensions in other embodiments, whereby the form and the dimensions of the nozzles of Figures 1 to 26 to are by way of example only, and the claimed subject matter is not limited to the specific forms and dimensions described with reference to Figures 1 to 26.

General optional features of nozzles of the invention

Dual conduit nozzles of the invention (also referred to herein as dual nozzles or combination nozzles) comprise at least two channels or passages (also referred to herein as conduits and/or bores) which comprise an inner and outer conduit as described herein.

Dual nozzles of the invention, may optionally have a generally cylindrical configuration, so for example the dual nozzles may usefully fit within conventional depositors that use using single bore nozzles of similar generally cylindrical configuration, size and shape with the minimal amount of modification.

For example in a dual nozzle of the invention the inner conduit may comprise a central cylindrical channel or bore surrounded by an outer conduit of substantially annular cross section when viewed in cross-section orthogonal to the axis of the central channel so that overall the dual nozzle is generally cylindrical. The nozzle may be manufactured as an integral unit using a food grade material, for example stainless steel. Although in a particular example described herein the nozzle may be manufactured from stainless steel, for example by machining a block of stainless steel, in alternative embodiments it could be manufactured from another food-grade material, from example from a food-grade metal or plastics material using any suitable manufacturing process, such as machining or moulding. Although the term bore may be used herein to describe a central inner channel or passage, it is to be understood that the channel or passage need not be manufactured by "boring" that channel or passage.

As used herein, the expression "food-grade" when referring to a material herein denotes that the material is permitted to be in contact with foodstuffs suitable for human consumption as defined under the relevant local legislation (also referred to herein as "suitable for food contact"). At the date of filing the present application in the European Union the relevant rules for materials that are suitable for food contact include the EU Regulation 1935/2004, entitled "Framework Regulation on materials and articles intended to come into contact with food" and EU regulation 2023/2006, entitled "Good Manufacturing Practice for materials and articles intended to come in contact with food". Also relevant are EU Regulations: 10/2011 on food contact with plastic materials (as amended by 2015/174, 202/2014, 1183/2012, 1183/2012, 1282/2011, 321/2011, 284/2011); 450/2009 on food contact with active and intelligent materials; 282/2008 on food contact with recycled plastic materials; 42/2007/42 on food contact with regenerated cellulose film; 1895/2005 on restrictions of food contact with certain epoxy materials; and EU Directives 500/1984 on national law of food contact with ceramic articles; and 11/1993 on release of N-nitrosamines and N-nitrosatable substances. Thus as used herein "food-grade material" denotes that said material is compliant with the aforementioned EU Regulations and Directives on suitability for food contact and preferably such food-grade materials will also those materials that will continue to be compliant with any updated rules and lists of materials issued under these and/or related EU Regulations or Directives.

The nozzles of and/or used in the present invention comprises a proximal end and a distal end. The proximal end may comprises the first (optionally outer) inlet for receiving the liquid, semi-liquid or semi-solid food product and the second inner inlet for receiving the inclusions, although in another embodiment the inlet the receives the food product may also be located elsewhere between the proximal and distal ends of the nozzle. The distal end may comprise outer outlet for depositing the (optionally aerated) liquid, semi-liquid or semi-solid food product. The distal end may also comprise a second inner inlet for dispensing the inclusions. The inner bore may extend from the inner inlet to the inner outlet. The outer conduit may extends from the first (optionally outer) inlet to the first outer outlet. The exterior of the nozzle may comprises various portions extending from the proximal end to the distal end.

A proximal portion at the proximal end of the nozzle may have a generally cylindrical external surface with an external diameter to be received within a nozzle-receiving aperture of the depositor. The cylindrical external surface of the proximal portion of the nozzle can typically have an external diameter in the range of, for example, 10 mm to 25 mm and a length of in the direction of an axis of the bore from the proximal end to the distal end of the nozzle (hereinafter referred to as the axial direction) of for example from 10 mm to 35 mm. The actual dimensions in any particular example will depend upon the apertures in the depositor into which the nozzle is to be inserted and the method of attachment. For example the cylindrical external surface of the proximal portion may be formed with an external screw thread to engage with an internal screw thread in a nozzle-receiving aperture of the depositor. However, in other examples, various attachment mechanisms, for example interlocking mechanisms, clips etc. can be provided for attaching the nozzle to a depositor as will be understood by the person skilled in the art.

In other example of an embodiment of the invention a nozzle of the invention (not shown) may be provided with distal portion that includes a boss with a hexagonal form to facilitate screwing of the nozzle into a receiving aperture of the depositor. The distal portion of the nozzle of the invention may be provided with a flange that presents a shoulder that can abut against a lower surface of the depositor when the nozzle is received with the nozzle-receiving aperture of the depositor. For example the boss may have a diameter of, for example, 10 mm to 25 mm and a length in the axial direction of for example from 8 mm to 20 mm. The flange may facilitate accurate location of the nozzle within the nozzle-receiving aperture. In another example embodiment, the flange could be omitted and instead, the boss could present the shoulder by being configured to have an external diameter larger than that of the cylindrical external surface of the proximal portion of the nozzle. In other example embodiments the boss could have other forms for example a cylindrical form. The form of the boss can be chosen, for example, based in part on the nature of the attachment mechanism for attaching the nozzle to the depositor.

The distal end of the boss may be formed with a conical external distal portion that extends from the hexagonal portion of the boss and may converge towards both outlets (outer and inner) from the nozzle. In one example nozzle may have a conical (frusto-conical) external distal portion that converges towards the outlets and terminates at a flat distal surface that surrounds the outlets of the nozzle. However, in other examples, the distal flat surface may not be present and the frusto-conical external distal surface may end at the outlets. The conical external distal portion can have a length of up to, for example, 20 mm in the axial direction according to a particular embodiment.

The two conduits that may comprise the interior if the dual nozzle (through which inclusions and liquid may pass independently) may comprises various portions extending from at least one of the inlets at the proximal end of the nozzle to at least one of the outlets at the distal end of the nozzle.

The bore that may form the interior of the inner conduit of the dual nozzle through which inclusions pass may comprises various portions extending from the inner inlet at the proximal end of the nozzle to the inner outlet at the distal end of the nozzle. Thus for example in one embodiment a first conical portion may reduce the diameter of the inner bore of the inner conduit from its inlet to a valve-receiving portion of the bore. The conical surface of the first conical portion may have a length in the axial direction of, for example, from 1 mm to 10 mm. The cylindrical valve-receiving portion of the inner bore can have a diameter of, usefully from 5 mm to 20 mm, more usefully from 10 mm to 15 mm and a length in axial direction of, for example, 8 mm to 35 mm. An inner conical valve seat portion may extend from the valve-receiving portion to an inner outlet bore portion. The conical valve seat portion may forms a sealing portion against which a corresponding conical sealing portion of a valve (for example a conical surface of a valve spindle) can engage to close the outlet bore portion. The surface of the conical valve seat portion may extend at a constant angle of, for example, 45° to 70° (the angle chosen to match and angle of a corresponding conical surface of a valve spindle) from the valve-receiving portion which has a diameter of conveniently from 5 mm to 20 mm, more conveniently from 10 mm to 15 mm to the outlet bore portion having a diameter of preferably from 1 mm to 4 mm, more preferably from 1.5 mm to 3 mm. The valve may be used to release portions of inclusions through the inner bore in co-ordination with operation of flow of liquid through the outer conduit. If the process is operated continuously flow of inclusions can be continuous as will be the flow of liquid from the outer conduit or if the process is used to deposit discrete amounts of aerated liquid the flow of inclusions can be temporarily interrupted so the amount of inclusions is matched to the amount of liquid deposited.

In another for example in an embodiment the inner bore may comprise a internal helical blades fitted so the blades rotate to abut the interior bore surface (or with a circumferential gap between blade and bore substantially less than the minimum size of the inclusions) and with the pitch and frequency of the helical blades being selected so that a defined portion of inclusions is entrapped between successive helical blades within the inner bore. On rotation of the blades within the inner bore the inclusion portions are moved in a distal direction within the bore (preferably from the proximal to distal end) to be deposited from the inner bore via the inner outlet. Usefully the internal screw is operated in co-ordination with the flow of liquid with the outer conduit so the portion of inclusions deposited is matched to the rate of deposition of the liquid.

In an embodiment of the nozzle as claimed herein, the outlet bore portion of the inner conduit does not extend all of the way from the conical valve seat portion to the inner outlet of the bore. In an embodiment a flared inner outlet portion is formed between a distal end of the inner outlet bore portion and the inner outlet of the bore. In the embodiment described above the outlet bore portion of the inner conduit may have a constant diameter of, usefully from 1 mm to 4 mm more usefully from 1.5 mm to 3 mm and a length in axial (longitudinal) direction of conveniently from 4 mm to 25 mm. The flared outlet portion of the inner bore may have a length in the axial direction of, for example, 1.5 mm to 3 mm and the surface of the flared outlet portion may flare at a constant angle of preferably from 15° to 45° more preferably from 20° to 40° to the axis of the inner bore to provide an outlet having a diameter of, for example, from 3 mm to 8 mm. In another example a nozzle of the invention can be provided with an inner outlet that is at least twice the diameter, for example of the order of 2 to 3 times the diameter of the outlet bore portion of the inner conduit described previously. The inner outlet may be formed with a clean and sharp edge where it meets with the flat distal surface or the surface of the external conical distal portion depending on whether or not a flat distal surface is present as discussed above. Although in the example above the surface of the flared outlet portion flares at a constant angle to the axis of the inner bore in other examples the flared outlet portion of the inner conduit may have different configurations. For example, in other embodiments, the flared outlet portion of the inner conduit could for example have a parabolic shape or a shape that approximates a parabolic shape such as a series of different angles to approximate a parabolic shape. The resultant shape comprises a series of part conical surfaces where the angle, relative to the axis of successive part conical surfaces in the axial direction gradually approaches the axial direction of the axis.

Although particular embodiments are described herein, it will be appreciated that the claimed subject matter is not limited to the specific embodiments described, and that alternative configurations are possible within the scope of the appended claims.

For example, in the described examples and embodiments herein the various portions of the bore of the inner conduit (inner bore) are circular in cross-section perpendicular to the longitudinal axis (i.e. seen in a transverse plane) to facilitate manufacture. It is to be noted that the various portions of the inner bore may not be exactly circular and may deviate therefrom due, for example, to manufacturing tolerances. Indeed, it is to be noted that the various portions of the inner bore could have a different shape in cross-section on a transverse plane (transverse cross-section). For example, one or more portions of the inner bore could be elliptical or oval in transverse cross-section. In this regard, although in the described examples, the flared outlet portion of the inner bore has a surface that defines part of a right conical surface that has a circular transverse cross-section, in other examples the flared outlet portion may have a different shape in transverse cross-section. For example, in an alternative example, the flared outlet portion may define part of the surface of, for example, an elliptic or oval cone terminating in an outlet that has an elliptical or oval shape in transverse cross-section and/or an oblique cone that tends to an apex that is not aligned above the center of the inner outlet.

Examples

Non limiting examples of the invention will now be described.

Comp A to C (Nozzles A to C) and Examples 1 to 4 (resp. Nozzles 1 to 3)

Four different nozzles will now be described some according to the invention and some as comparisons.

Nozzle 1 of the invention is a nozzle of novel design comprising a screw therein and which was formed by additive manufacturing (3D printing). Nozzle 1 is used to mix the inclusions directly into the aerated chocolate.

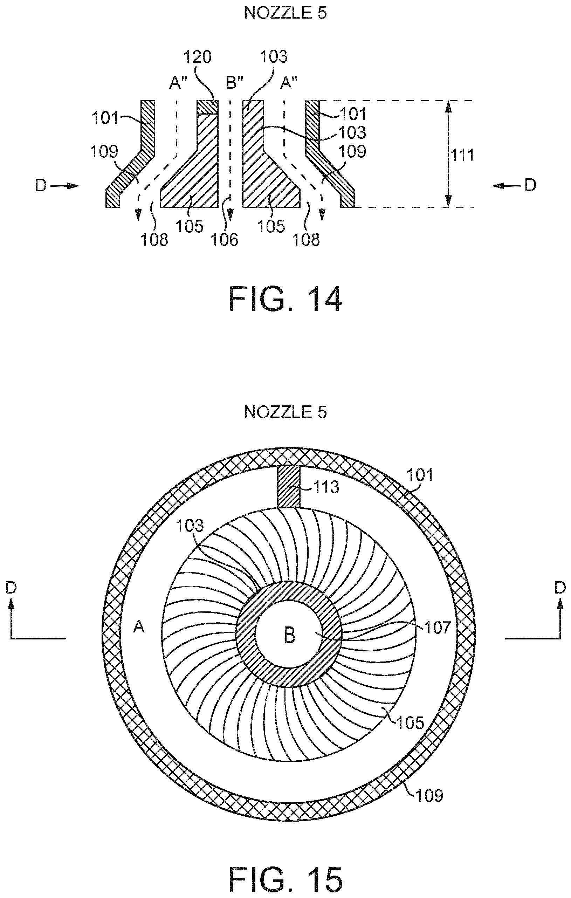

Nozzles 2 and 3 of the invention are shown schematically in respective Figures 12 and 13 (Nozzle 2) and Figures 14 and 15 (Nozzle 3).

Nozzle A is a known nozzle designed for use with water and available commercially from Festo.

Nozzle B is a known nozzle designed for use with air and available commercially from Festo designed to be normally closed with a large 15 mm diameter

Nozzle C is a known nozzle designed for use to generate reduced pressure (vacuum) available commercially from Festo designed to be normally open with a smaller diameter less than that of Nozzle 3.

In the tests below Nozzles A and 1, 2 and 3 were used with a Novac™ gas injector in a first method (where the pressure after the exit of a Novac™ injector is atmospheric pressure). Nozzles B and C were used with a Novac™ injector in a second method (where the pressure after the exit of a Novac™ injector is higher than atmospheric pressure).

Referring to Figures 1, 2 and 3 Nozzle A delivered a good micro-aeration quality of a finished chocolate bar without inclusions (see Figure 2). The aerated mass flowed out of the nozzle in a very controlled way and was easily adjustable (by simply screwing the black section to open of close the gap between the two sections, see Figure 1).

Inclusions can be fed into the stream of chocolate via Nozzle A to be incorporated therein, however the feeding mechanism was inefficient and blocked easily as doses of inclusions was passed there through. The central orifice in Nozzle A was angled inwards, potentially impeding the flow of inclusions. It was found that whilst tapping the nozzle whilst depositing helped unblock the nozzle (and this effect could also be achieved using a vibrator feed system). Using smaller inclusions (such as fine almond pieces compared to the larger pecan pieces used for the majority of the trials) did not reduce the tendency of Nozzle A to block when dosing inclusions.

Example 1 (Nozzle 1)

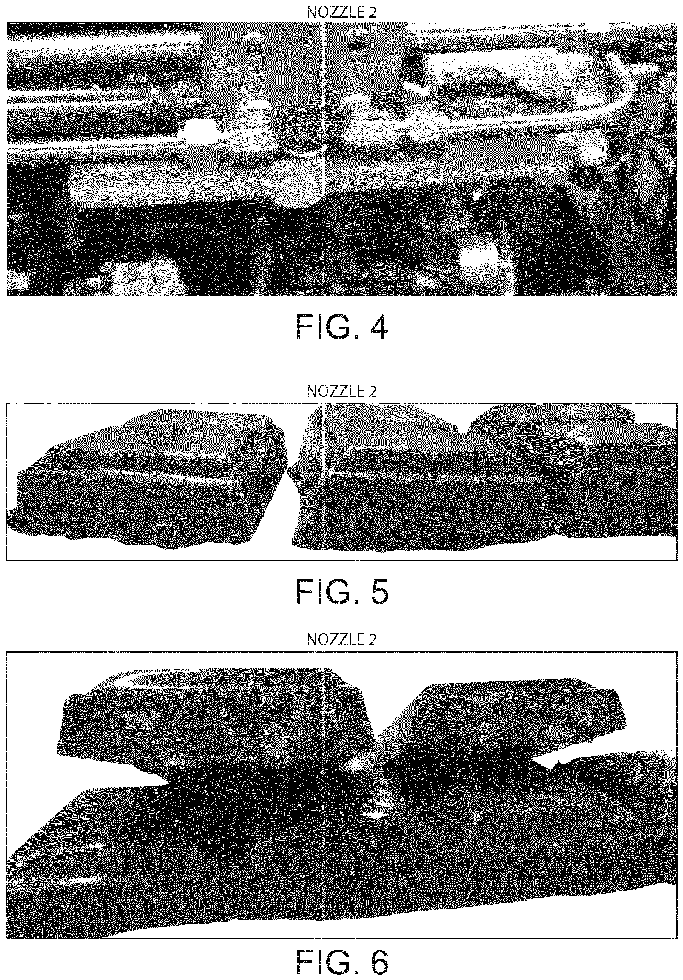

Refer to Figures 4 to 8;

Nozzle 1 (having a screw feeder therein) produces a micro-aerated product homogeneously dosed with inclusions throughout the chocolate mass. Without being bound by any theory it is believed this was assisted by automatically timing of the screw motor within the Nozzle 1 so each inclusion dose is added to each chocolate deposit at a consistent rate and time. Although there was a slight destabilization of the micro-aeration and small but visible bubbles could be seen rising to the surface during depositing the resultant product contained homogeneously mixing inclusions in an aerated chocolate mass. Bubble coalescence resulting from the mechanical action of the screw feeder can be minimized by careful selection of the feeder parameters. It was also found that if inclusions are not fed through Nozzle 1 some chocolate worked its way back into the hopper. Due to the potential destabilization of the aeration, Nozzle 1 was preferred for micro-aerated mass (where the bubbles are smaller) rather than macro-aerated masses (with larger bubbles).

Nozzle 2 is described below with reference to Figures 12 and 13 and may be tested in the first method at atmospheric pressure

Nozzle 3 is described below with reference to Figures 14 and 15 and may be tested in the first method at atmospheric pressure

Nozzles B and C

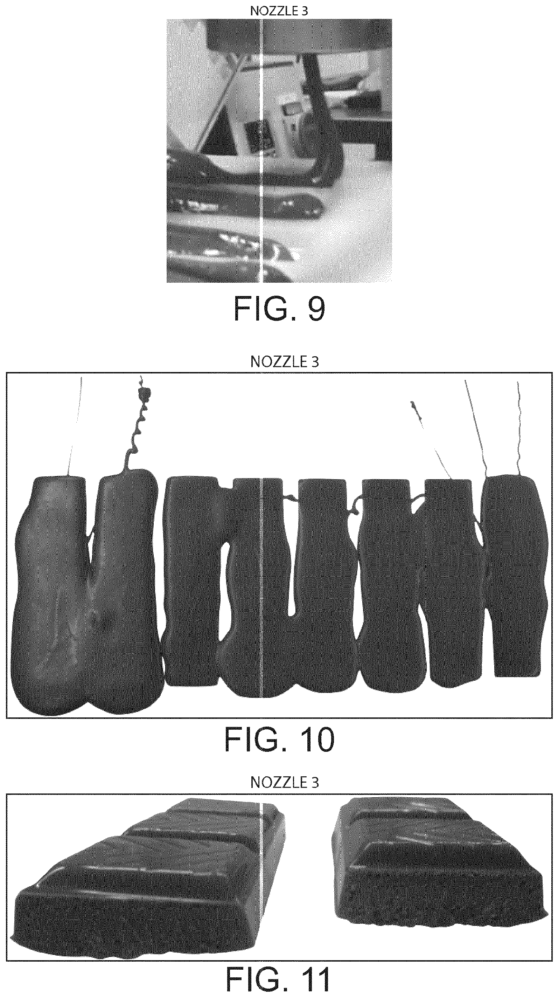

Refer to Figures 9 to 11

Two known Nozzles B and C as describe above were tested as a comparison to deposit chocolate from the Novac™ injector. Nozzles B and C differed in terms of whether they were normally 'closed' (Nozzle B) or 'open' (Nozzle C). Nozzles B and C were used to deposit chocolate masses containing inclusions under pressure, i.e. using the second method described above.

Any a suitable apparatus can be used to feed suitable doses of inclusions into the Novac™ injector (such a fruit feeder, typically used in ice cream production). In the present examples Nozzles B and C were first tested to ensure they can maintain optimal aeration quality in the absences and then presence of inclusions to determine whether the nozzles would bet blocked by the inclusions, independently of how the inclusions may be first introduced into the Novac™ injector.

No significant difference was seen in terms of the performance of Nozzles B and C. Although micro-aeration quality was satisfactory and slightly better than that seen with Nozzle 2 without inclusions, depositing with inclusions with either Nozzle B or C was challenging, with the mass 'swirling' as it left either Nozzle B or C. When these nozzles were used to deposit aerated chocolate at a distance from the mould and significant tailing was also noted. The physical size of each Nozzle B and C was found to be a challenge in terms of depositor block design.

The Nozzle 1 with screw feeder therein was found to be advantageous over conventional off the shelf Nozzles A, B or C. It was also found that using the first method (adding inclusions at atmospheric pressure) was preferred as opposed to the incorporation of inclusions into aerated chocolate under pressure. Nozzle 1 not only delivered the most promising results in terms of homogeneity of inclusion mixing but can be prepared in stainless steel using conventional machining methods (as well as by than 3D printing) and thus can be made more cheaply than a more complex design. Nozzle 1 can be used with suitable means that positively feed the inclusions into the mass, rather than rely on gravity alone. Nozzle 1 gave superior micro-aeration quality to the deposited chocolate compared to the Nozzles A, B and C tested. Nozzle 1 may be used to ensure homogeneous mixing of inclusions with aerated chocolate and/or may also be used in a secondary method to fine tune the amount of aerated chocolate deposited from a nozzle.

Further examples

Trials were conducted using a Novac™ injector to deposit the aerated chocolate, using a 3D printing to prepare nozzles of the invention. The inclusion used was rice crispies, in combination of the recipe of conventional chocolate used to prepare the chocolate bar sold by the applicant in Mexico under the registered trade mark Crunch®. Two samples were successfully made (micro-aerated and macro-aerated).

Example 4 (Nozzle 4 and Figures 12 & 13)

A further embodiment of the present invention is shown in Figures 12 and 13 and is also referred to herein as Nozzle 4. Aerated composition, preferably aerated chocolate, is passed from a proximal end through an outer conduit in the direction of arrows A to A' to exit the outer conduit at a distal end. The outer conduit is defined by its proximal end, the interior of an outer wall (1) and the exterior of an inside wall 3 and a flow director 5 at its distal end. As shown in Figure 2 the outer conduit flares outwardly towards an outer annular exit orifice at its distal end defined by the edge of the flow director 5 and the bottom of the outer wall 1. The outwardly flared conduit is achieved by a flow director which comprise a substantial flat circular plate shown in Figures 12 and 13. Particulate inclusions are passed from a proximal end through an inner conduit substantially circular in cross-section in the direction of arrows B to B' to exit the inner conduit at a distal end. The inner conduit is defined by its proximal end, the interior of the inside wall 3 and an inner circular exit orifice at its distal end.

The aerated chocolate passes through the outer annular exit orifice to form a stream of liquid aerated composition in the form of a substantially annular curtain deposed around the circumference of a circle defined by the outer annular exit orifice at its distal end as shown by arrows A'. The inclusions pass through the inner circular exit orifice to from a narrow inner stream of inclusion particles that flow inside the substantially annular stream of aerated composition at its distal end as shown by arrow B'. Thus inclusions are fed through the centre of the nozzle, with chocolate flowing around the outside, effectively encasing them in chocolate without any mechanical mixing element. The two streams of aerated composition A' and inclusions B' fall under the action of pressure and/or gravity from their respective distal ends towards a substrate (not shown) onto which the aerated composition is deposited together with the inclusions.

Usefully in this embodiment of Nozzle 4 as shown in Figures 12 and 13 deposition will typically occur so the major axis of the conduits is substantially vertical i.e. the proximal ends are vertically located above the distal ends. In this example the streams A' and B' fall in mid-air from their distal ends at least partially under the influence of gravity.

Advantageously the inclusion stream B' and aerated composition stream A' do not come into contact whilst they are being deposited, once they have been deposited, i.e. are on the substrate. This minimizes loss of gas in the aerated composition due to mixing and/or turbulence caused by interaction with the inclusion stream which may leave the inner circular exit orifice at a different flow rate from the rate at which aerated composition stream leaves the outer annular exit orifice.

Example 5 (Nozzle 5 and Figures 14 & 15)

Another embodiment of the present invention is shown in Figures 14 and 15 and is also referred to herein as Nozzle 5. Aerated composition, preferably aerated chocolate, is passed from a proximal end through an outer conduit in the direction of arrow A" to exit the outer conduit 109 at a distal end. The outer conduit is defined by its proximal end, the interior of an outer wall (101) and the exterior of an inside wall 103 and a frusto-conical flow director 105 at its distal end. As shown in Figure 14 the outer conduit flares outwardly towards an outer annular exit orifice 108 at its distal end defined by the edge of the flow director 105 and the bottom of the outer wall 101 over a vertical distance.

The outwardly flared conduit may be achieved by a flow director than has a substantially frusto-conical surface deposed towards the direction of flow A in parallel with a matching surface in the inside of the outer wall 103 to define the conduit as shown in Figures 13 and 14. Without wishing to be bound by any theory it is believed that an outer conduit with an internal profile partially defined by a frusto-conical surface defines a smoother path for the composition to flow which is thus less prone to disrupt the aerated composition and/or cause turbulence which otherwise may result in loss of gas (de-aeration) of the composition.

According to particular embodiments therefore, where reference is made to a conical surface or a part thereof, or a frusto-conical surface, this may be a right conical surface or part thereof or it may be another type of conical surfaces or a part thereof.

This embodiment, Nozzle 5 also several other preferred optional features that may be advantageous. A short nozzle length, as defined by the average distance from proximal to distal end defined by arrows 111. The distance 111 is a short as practical to prevent de-aeration as the aerated material passes through the outer conduit. The exit orifices 108 and 106 are also usefully lie along the same plane, preferably orthogonal to the plane passing through the central point at the proximal and distal ends of the nozzle. For a preferred nozzle which is deposed vertically the exit orifices will all lie in the same horizontal plane. In this embodiment the inclusions passing through the inner central conduit are still encased in the chocolate flow, but any entrained atmospheric air can be pushed out as it composition flows into the mould.

Particulate inclusions are passed from a proximal end through an inner conduit substantially circular in cross-section in the direction of arrows B to B' to exit the inner conduit at a distal end. The inner conduit is defined by its proximal end, the interior of the inside wall 103 and an inner circular exit orifice 109 at its distal end.

The aerated chocolate passes through the outer annular exit orifice 108 to from a stream of liquid aerated composition in the form of a substantially annular curtain deposed around the circumference of a circle defined by the outer annular exit orifice at its distal end as shown by arrow A". The inclusions pass through the inner circular exit orifice 106 to from a narrow inner stream of inclusion particles that flow inside the almost annular stream of aerated composition at its distal end as shown by arrow B". As with the previous embodiment shown in Figures 12 and 13 inclusions are fed through the centre of the nozzle, with chocolate flowing around the outside, effectively encasing them in chocolate without any mechanical mixing element. The two streams of aerated composition A" and inclusions B" may fall under the action of pressure and/or gravity from their respective distal ends towards a substrate (not shown) onto which the aerated composition is deposited together with the inclusions.

Usefully in this embodiment of Nozzle 5 shown in Figures 14 and 15 deposition will typically occur so the major axis of the conduits is substantially vertical i.e. the proximal ends are vertically located above the distal ends. In this example the streams A" and B" fall in mid-air from their distal ends at least partially under the influence of gravity.

Advantageously the inclusion stream B" and aerated composition stream A" do not mix substantially during deposition rather they mix once they have been deposited, i.e. when on the substrate and/or in a mould. However this does not discount that the aerated chocolate may gently coat some or all of the inclusions as or after they leave the exit orifice. Minimising or avoiding mechanical mixing of the streams minimizes loss of gas in the aerated composition, which is subject to lower shear forces and/or turbulence that may otherwise be generated by over-energetic interactions between inclusion particles and the chocolate (e.g. when subject to vigorous mixing). For example the inclusions may leave the inner circular exit orifice at a different flow rate from the rate at which aerated composition stream leave the outer annular exit orifice and this relative motion between streams may cause undesired de-aeration if the streams mixed substantially during deposition. Where final mixing of inclusions and chocolate occurs in the mould, gentle vibration of the mould can be used to minimise bubble coalescence.

Example 6 (Nozzle 6 and Figures 16 to 18)

Figures 16 to 18 are of another embodiment of a nozzle (Nozzle 6) for use in the invention where:

> Figure 16 shows a cross section of Nozzle 6 in an up, open position.
> Figure 17 shows a cross section of Nozzle 6 in a middle closed position.

Example 7 (Nozzle 7 and Figures 19 & 20)

Figures 19 to 20 are of yet other embodiment of a nozzle (Nozzle 7) for use in the invention having a screw to deliver the inclusions through the inner conduit of the invention.

Example 8 (Nozzle 8 and Figures 21 & 22) and

Figures 21 to 22 illustrate still another embodiment of a nozzle for use in the present invention, Nozzle 8, where the inclusions are initially fed substantially horizontally through the apparatus via a conduit that interrupts the path of deposition of chocolate fed through a vertical conduit, where there is a corresponding orifice in the bottom wall of the inclusion conduit (not shown) which allows both chocolate and inclusions to pass there through under gravity (via Nozzle 8 and conduits as described herein).

### Example 9 (Nozzle 9 and Figure 23)

Figure 23 shows in cross section of another embodiment of the invention Nozzle 9 with a central bore containing a screw feeder for the inclusions and where the chocolate mass enters the apparatus from a conduit orthogonal to the axis of the nozzle. The chocolate is allowed to bathe the central screw feeder and exits from below as shown.

### Example 10 (Nozzle 10 and Figure 24)

Figure 24 shows in cross section of another embodiment of the invention Nozzle 10 in which there is a central bore containing screw feeder for the inclusions movable along the main axis of the bore relative to the outer conduit through which the chocolate flows towards the exit orifice, where the respective surfaces of the ends of the central bore walls and the ends of the walls of the outer conduit are shaped at an angular to the main bore axis so that in one (closed) position of the central bore the surfaces faces can abut each other face to face to form a seal and thus close the outer orifice and prevent chocolate flow there through. This provides better control of the chocolate flow that when embodiments (e.g. Nozzle 7) where the inner and outer tubes meet at an edge to close the orifice.

### Comp D (Nozzle D and Figures 25 and 26)

This shows a known Nozzle D incorporating a valve spindle shown in an open (Figure 25) and closed (Figure 26) positions as described previously. This value spindle may optionally be used in or incorporated into nozzles and/or apparatus of the present invention as a means to close either the inner conduit (or with modification) the outer conduit.

### Density matching

In each of the examples of the invention described herein the gas ($N_2$) flow rate was set once at the beginning of the process and was matched to the density of the inclusions added so for that example the inclusions did not substantially migrate within the liquid chocolate deposited into mould over the time taken for the chocolate to cool and solidify and fix the inclusions in place. The gas flow rate was determined once each time by calculating the amount and rate of gas injection that is needed such that the density of the fluid would be comparable to the density given for the inclusions that were added and no further operator intervention was needed.

However analogous embodiments and examples can be envisaged where the inclusions added were changed during the process and/or the inclusion mixture has a wide variability in density and either the gas injection setting would be adjusted manually by an operator during the process. Optionally if mean density is measured from particle size, mass measurements and/or using other sensing means (such means shown schematically in the Figures by elements labelled 20 (or n20 where 'n' is a multiple of a hundred), input parameters can be generated which would then be readily used to generate control parameters that can be used manually or automatically and directly or indirectly to adjust the gas pressures, gas flow and/or other parameters used by Novac™ gas injector in the examples herein.

## Claims

1. A process for preparing an aerated food composition having inclusions dispersed in solid material, the process comprising the steps of:

   (a) providing an apparatus suitable for use in a process of the present invention, the apparatus comprising:

   i) at least one fluid receiving vessel or inclusion receiving vessel suitable for receiving respectively fluid edible composition and/or inclusions;
   ii) at least one input conduit in fluid connection with the respective at least one receiving vessel where present, the least one conduit being suitable for transport of respective fluid and/or inclusions to a processing chamber;
   iii) a processing chamber comprising a density adjusting means which is an aerating means capable of altering the density of the fluid composition and incorporating gas into the fluid composition, in the presence of inclusions, the density adjusting means being controlled by a controlling means;
   iv) an output conduit in fluid connection with the processing chamber so the material having inclusions dispersed therein can be transported through the output conduit to be collected for subsequent use and/or to other apparatus for further processing;

   **characterized in that**:

   A) the input conduit and/or processing chamber and the at least one receiving vessel comprise at least one sensing means that measure at least one input parameter, where the at least one input parameter are capable of determining directly and/or indirectly: the instant density of the inclusions and/or the fluid composition in the apparatus; and

B) the aerating means is controllable by control means to control the amount of gas delivered to the fluid composition, where the control means and sensing means are in direct or indirect connection so control parameters are capable of being generated directly and/or indirectly in response to changes in the input parameters;

(b) adding an inclusion and/or plurality of inclusions to the inclusion receiving vessel and/or adding an edible fluid composition to the fluid receiving vessel;

(c) generating at least one input parameter from the fluid composition and/or inclusion or plurality of inclusions using the at least one sensing means and before the fluid and/or inclusions are present in the processing chamber; the least one input parameter being used to calculate a density of inclusion or plurality of inclusions and/or density of fluid composition that will be transported to the processing chamber at a given moment;

(d) transporting the inclusion or plurality of inclusions and/or the fluid composition to the processing chamber; the inclusion or plurality of inclusions being added to the fluid composition in a pre-determined pattern;

(e) generating at least one control parameter to control:

(i) operation of the density adjusting means in the processing chamber and/or
(ii) transport of the fluid composition and/or inclusions to the processing chamber;

f) adjusting the density of the fluid composition in the processing chamber using the at least one control parameter to control the density adjusting means, the control parameter being calculated from the at least one input parameter so that the density adjusting means will substantially match the density of inclusion or plurality of inclusions added and/or to be incorporated therein; and

(g) depositing the fluid composition through the output conduit onto a substrate;

(h) allowing the fluid composition to solidify with the inclusion or plurality of inclusions dispersed therein;

to form an food product comprising a solid material with inclusion or plurality of inclusions dispersed therein in the pre-determined pattern, in which the fluid edible composition is a chocolate or compound.

2. A process as claimed in claim 1, in which in B) the aerating means is controllable by control means operated on by control parameters in a feedback loop to control the amount of gas delivered to the fluid composition, where the control means and sensing means are in direct or indirect connection so control parameters are capable of being generated directly and/or indirectly substantially in real time in response to changes in the input parameters, or

a process as claimed in claim 1, in which the sensing means comprises at least one sensing means that measures at least one input parameter taken before the process starts; and the aerating means is controllable by control means which comprises presetting the aerating means based on fixed control parameters and/or input parameters calculated from the sensing means measurement determined before the process starts.

3. A process as claimed in any preceding claim which is continuous and the instant density of fluid is matched to the density of the specific inclusions added to that fluid at any point in time so that for each portion of the mixture of fluid and inclusion deposited, the inclusions and surrounding fluid will have substantially the same density during deposition and/or cooling.

4. A process as claimed in any preceding claim in which the substrate onto which the fluid composition and inclusions are deposited is a mould.

5. A product obtained and/or obtainable by a process as claimed in any preceding claim, which is aerated, in which the aeration is micro-aeration, where the mean size of the gas bubbles is 100 microns or less.

6. A product as claimed in claim 5, where the product comprises inclusions dispersed in a pre-determined pattern in a solid material for which the fluid composition is a precursor.

7. A product as claimed claim 6, in which the predetermined pattern of inclusions is a substantially homogenous dispersion within the solid material.

**Patentansprüche**

1. Verfahren zum Herstellen einer belüfteten Nahrungsmittelzusammensetzung, die Einschlüsse aufweist, die in einem Feststoff dispergiert sind, das Verfahren umfassend die Schritte:

(a) Bereitstellen einer Vorrichtung, die für die Verwendung in einem Verfahren der vorliegenden Erfindung geeignet ist, die Vorrichtung umfassend:

i) mindestens ein Flüssigkeitsaufnahmegefäß oder Einschlussaufnahmegefäß, das zum Aufnehmen der jeweiligen flüssigen essbaren Zusammensetzung und/oder Einschlüsse geeignet ist;

ii) mindestens eine Eingangsleitung in Flüssigkeitsverbindung mit dem jeweiligen mindestens einen Aufnahmegefäß, sofern vorhanden, wobei die mindestens eine Leitung für den Transport von jeweiliger Flüssigkeit und/oder Einschlüssen zu einer Verarbeitungskammer geeignet ist;

iii) eine Verarbeitungskammer, umfassend ein Dichteanpassmittel, das ein Belüftungsmittel ist, das in der Lage ist, die Dichte der Flüssigkeitszusammensetzung zu verändern und Gas in die Flüssigkeitszusammensetzung bei Vorhandensein von Einschlüssen einzulagern, wobei das Dichteanpassmittel durch ein Steuermittel gesteuert wird;

iv) eine Ausgangsleitung in Flüssigkeitsverbindung mit der Verarbeitungskammer, sodass der Stoff, der darin dispergierte Einschlüsse aufweist, durch die Ausgangsleitung, um für eine nachfolgende Verwendung gesammelt zu werden und/oder an andere Vorrichtungen zur weiteren Verarbeitung transportiert werden kann;

**dadurch gekennzeichnet, dass:**

A) die Eingangsleitung und/oder die Verarbeitungskammer und das mindestens eine Aufnahmegefäß mindestens ein Abtastmittel, das mindestens einen Eingangsparameter misst, umfassen, wobei der mindestens eine Eingangsparameter in der Lage ist, direkt und/oder indirekt Folgendes zu bestimmen: die momentane Dichte der Einschlüsse und/oder der Flüssigkeitszusammensetzung in der Vorrichtung; und

B) das Belüftungsmittel durch ein Steuermittel steuerbar ist, um die Menge an Gas, die an die Flüssigkeitszusammensetzung abgegeben wird, zu steuern, wobei das Steuermittel und das Abtastmittel in direkter oder indirekter Verbindung stehen, wobei Steuerparameter in der Lage sind, als Reaktion auf Änderungen in den Eingangsparametern direkt und/oder indirekt generiert zu werden;

(b) Hinzufügen eines Einschlusses und/oder einer Vielzahl von Einschlüssen zu dem Einschlussaufnahmegefäß und/oder Hinzufügen einer essbaren Flüssigkeitszusammensetzung zu dem Flüssigkeitsaufnahmegefäß;

(c) Generieren mindestens eines Eingangsparameters aus der Flüssigkeitszusammensetzung und/oder dem Einschluss oder der Vielzahl von Einschlüssen unter Verwendung des mindestens einen Abtastmittels und bevor die Flüssigkeit und/oder die Einschlüsse in der Verarbeitungskammer vorhanden sind; wobei der mindestens ein Eingangsparameter verwendet wird, um eine Dichte des Einschlusses oder der Vielzahl von Einschlüssen und/oder eine Dichte der Flüssigkeitszusammensetzung zu berechnen, die zu der Verarbeitungskammer zu einem gegebenen Moment transportiert werden;

(d) Transportieren des Einschlusses oder der Vielzahl von Einschlüssen und/oder der Flüssigkeitszusammensetzung zu der Verarbeitungskammer; der Einschluss oder die Vielzahl von Einschlüssen zu der Flüssigkeitszusammensetzung in einem vorbestimmten Muster hinzugefügt werden;

e) Generieren mindestens eines Steuerparameters zum Steuern von:

(i) einem Betrieb des Dichteanpassmittels in der Verarbeitungskammer und/oder
(ii) einem Transport der Flüssigkeitszusammensetzung und/oder der Einschlüsse zu der Verarbeitungskammer;

f) Einstellen der Dichte der Flüssigkeitszusammensetzung in der Verarbeitungskammer unter Verwendung des mindestens einen Steuerparameters, um das Dichteanpassmittel zu steuern, wobei der Steuerparameter aus dem mindestens einen Eingangsparameter berechnet wird, sodass das Dichteanpassmittel im Wesentlichen mit der Dichte des Einschlusses oder der Vielzahl von Einschlüssen übereinstimmt, die hinzugefügt und/oder darin eingelagert werden sollen; und

(g) Aufbringen der Flüssigkeitszusammensetzung durch die Ausgangsleitung auf ein Substrat;

(h) Ermöglichen, dass die Flüssigkeitszusammensetzung mit dem Einschluss oder der Vielzahl von darin dispergierten Einschlüssen fest wird;

um ein Nahrungsmittelprodukt auszubilden, umfassend einen Feststoff mit einem Einschluss oder einer Vielzahl von Einschlüssen, die darin in einem vorbestimmten Muster dispergiert sind, wobei die flüssige essbare Zusammensetzung eine Schokolade oder eine Mischung ist.

2. Verfahren nach Anspruch 1, wobei in B) das Belüftungsmittel durch ein Steuermittel steuerbar ist, das durch Steuerparameter in einer Rückkopplungsschleife betrieben wird, um die Menge an Gas, die an die Flüssigkeitszusammensetzung abgegeben wird, zu steuern, wobei das Steuermittel und das Abtastmittel in direkter oder indirekter Verbindung stehen, wobei Steuerparameter in der Lage sind, als Reaktion auf Änderungen in den Eingangsparametern direkt und/oder indirekt im Wesentlichen in Echtzeit generiert zu werden; oder

   ein Verfahren nach Anspruch 1, wobei
   das Abtastmittel mindestens ein Abtastmittel umfasst, das mindestens einen Eingangsparameter misst, der vor Beginn des Verfahrens erfasst wird; und
   das Belüftungsmittel durch ein Steuermittel steuerbar ist, das ein Voreinstellen des Belüftungsmittels basierend auf festen Steuerparametern und/oder Eingangsparametern umfasst, die aus der Abtastmittelmessung, die vor dem Verfahrensbeginn bestimmt wird, berechnet werden.

3. Verfahren nach einem der vorstehenden Ansprüche, das kontinuierlich ist und wobei die momentane Dichte der Flüssigkeit mit der Dichte der spezifischen Einschlüsse übereinstimmt, die der Flüssigkeit zu einem beliebigen Zeitpunkt hinzugefügt werden, sodass für jeden abgeschiedenen Anteil der Mischung aus Flüssigkeit und Einschluss die Einschlüsse und die umgebende Flüssigkeit im Wesentlichen die gleiche Dichte während der Abscheidung und/oder Abkühlung aufweisen.

4. Verfahren nach einem der vorstehenden Ansprüche, wobei das Substrat, auf dem die Flüssigkeitszusammensetzung und die Einschlüsse abgeschieden werden, eine Form ist.

5. Produkt, das durch ein Verfahren nach einem der vorstehenden Ansprüche erhalten wird und/oder erhältlich ist, das belüftet ist, wobei die Belüftung eine Mikrobelüftung ist, wobei die mittlere Größe der Gasblasen 100 Mikrometer oder weniger beträgt.

6. Produkt nach Anspruch 5, wobei das Produkt Einschlüsse umfasst, die in einem vorbestimmten Muster in einem Feststoff dispergiert sind, für den die Flüssigkeitszusammensetzung ein Vorläufer ist.

7. Produkt nach Anspruch 6, wobei das vorbestimmte Muster von Einschlüssen eine im Wesentlichen homogene Dispersion innerhalb des Feststoffs ist.

## Revendications

1. Procédé de préparation d'une composition alimentaire aérée ayant des inclusions dispersées dans un matériau solide, le procédé comprenant les étapes consistant à :

   (a) fournir un appareil pour utilisation dans un procédé de la présente invention, l'appareil comprenant :

      i) au moins un récipient de réception de fluides ou un récipient de réception d'inclusions destiné à recevoir respectivement une composition comestible fluide et/ou des inclusions ;
      ii) au moins un conduit d'entrée en liaison fluidique avec l'au moins un récipient de réception respectif, le cas échéant, l'au moins un conduit étant destiné à transporter un fluide et/ou des inclusions respectifs vers une chambre de traitement ;
      iii) une chambre de traitement comprenant un moyen de réglage de densité qui est un moyen d'aération capable de modifier la densité de la composition de fluide et d'incorporer du gaz dans la composition de fluide, en présence d'inclusions, le moyen de réglage de densité étant commandé par un moyen de commande ;
      iv) un conduit de sortie en liaison fluidique avec la chambre de traitement, de sorte que le matériau contenant des inclusions dispersées puisse être transporté à travers le conduit de sortie pour être collecté pour utilisation ultérieure et/ou vers d'autres appareils pour un traitement ultérieur ;
      **caractérisé en ce que :**

      A) le conduit d'entrée et/ou la chambre de traitement et l'au moins un récipient de réception comprennent au moins un moyen de détection qui mesure au moins un paramètre d'entrée, où l'au moins un paramètre d'entrée est capable de déterminer directement et/ou indirectement : la densité instantanée des inclusions et/ou la composition de fluide dans l'appareil ; et
      B) le moyen d'aération peut être commandé par un moyen de commande pour commander la quantité de gaz délivrée à la composition de fluide, où le moyen de commande et le moyen de détection sont en liaison directe ou indirecte de sorte que les paramètres de commande puissent être générés directement et/ou indirectement en réponse à des changements dans les paramètres d'entrée ;

(b) ajouter une inclusion et/ou une pluralité d'inclusions dans le récipient de réception d'inclusions et/ou ajouter une composition de fluide comestible dans le récipient de réception de fluides ;

(c) générer au moins un paramètre d'entrée à partir de la composition de fluide et/ou de l'inclusion ou de la pluralité d'inclusions à l'aide d'au moins un moyen de détection et avant que le fluide et/ou les inclusions ne soient présents dans la chambre de traitement ; l'au moins un paramètre d'entrée est utilisé pour calculer une densité d'inclusion ou d'une pluralité d'inclusions et/ou la densité de la composition de fluide qui seront transportées dans la chambre de traitement à un moment donné ;

(d) transporter l'inclusion ou la pluralité d'inclusions et/ou la composition de fluide vers la chambre de traitement ; l'inclusion ou la pluralité d'inclusions sont ajoutées à la composition de fluide selon un modèle prédéterminé ;

(e) générer au moins un paramètre de commande à commander :

    (i) le fonctionnement du moyen de réglage de densité dans la chambre de traitement et/ou

    (ii) le transport de la composition de fluide et/ou des inclusions vers la chambre de traitement ;

f) régler la densité de la composition de fluide dans la chambre de traitement à l'aide d'au moins un paramètre de commande pour commander le moyen de réglage de densité, le paramètre de commande étant calculé à partir de l'au moins un paramètre d'entrée de manière à ce que le moyen de réglage de densité corresponde sensiblement à la densité d'inclusion ou de la pluralité d'inclusions ajoutées et/ou devant être incorporées dans la composition ; et

(g) déposer la composition de fluide sur un substrat par le conduit de sortie ;

(h) permettre à la composition de fluide de se solidifier avec l'inclusion ou la pluralité d'inclusions qui y sont dispersées ;

pour former un produit alimentaire comprenant un matériau solide avec une inclusion ou une pluralité d'inclusions dispersées dans celui-ci dans le modèle prédéterminé, dans lequel la composition comestible fluide est un chocolat ou un composé.

2. Procédé selon la revendication 1, dans lequel, dans B), le moyen d'aération peut être commandé par un moyen de commande fonctionnant sur des paramètres de commande dans une boucle de rétroaction pour commander la quantité de gaz délivrée à la composition de fluide, où le moyen de commande et le moyen de détection sont en liaison directe ou indirecte de sorte que des paramètres de commande sont capables d'être générés directement et/ou indirectement pratiquement en temps réel en réponse à des changements dans les paramètres d'entrée, ou

    un procédé selon la revendication 1, dans lequel le moyen de détection comprend au moins un moyen de détection qui mesure au moins un paramètre d'entrée pris avant que le procédé débute ; et
    le moyen d'aération peut être commandé par un moyen de commande qui comprend le préréglage du moyen d'aération sur la base de paramètres de commande fixes et/ou de paramètres d'entrée calculés à partir de la mesure du moyen de détection déterminée avant que le procédé débute.

3. Procédé selon l'une quelconque revendication précédente, qui est continu, et la densité instantanée de fluide est adaptée à la densité des inclusions spécifiques ajoutées à ce fluide à tout moment, de sorte que pour chaque portion du mélange de fluide et d'inclusions déposé, les inclusions et le fluide environnant auront sensiblement la même densité au cours du dépôt et/ou du refroidissement.

4. Procédé selon l'une quelconque revendication précédente, dans lequel le substrat sur lequel la composition de fluide et les inclusions sont déposées est un moule.

5. Produit obtenu et/ou susceptible d'être obtenu par un procédé selon l'une quelconque revendication précédente, qui est aéré, dans lequel l'aération est une micro-aération, où la taille moyenne des bulles de gaz est inférieure ou égale à 100 microns.

6. Produit selon la revendication 5, dans lequel le produit comprend des inclusions dispersées selon un modèle prédéterminé dans un matériau solide pour lequel la composition de fluide est un précurseur.

7. Produit selon la revendication 6, dans lequel le modèle prédéterminé d'inclusions est une dispersion sensiblement homogène dans le matériau solide.

NOZZLE 1

FIG. 1

NOZZLE 1

FIG. 2

NOZZLE 1

FIG. 3

NOZZLE 2

FIG. 4

NOZZLE 2

FIG. 5

NOZZLE 2

FIG. 6

NOZZLE 2

FIG. 7

NOZZLE 2

FIG. 8

NOZZLE 3

FIG. 9

NOZZLE 3

FIG. 10

NOZZLE 3

FIG. 11

NOZZLE 4

FIG. 12

NOZZLE 4

FIG. 13

NOZZLE 5

FIG. 14

NOZZLE 5

FIG. 15

NOZZLE 6

FIG. 16

NOZZLE 6

FIG. 17

NOZZLE 6

FIG. 18

NOZZLE 7

FIG. 19

NOZZLE 7

FIG. 20

NOZZLE 8

FIG. 21

NOZZLE 8

FIG. 22

NOZZLE 10

FIG. 23

NOZZLE 11

FIG. 24

NOZZLE D

95

917

921

932

913

930

919

928

936

934

# FIG. 25

NOZZLE D

95

917

921

932

913

919

928

930

936

934

# FIG. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016198659 A
- WO 2010102716 A
- EP 2016837 A
- WO 201591500 A
- WO 2004056191 A
- WO 2015165926 A
- US 2082313 A
- EP 16190093
- WO 2005063036 A

**Non-patent literature cited in the description**

- **F. M. NELSEN** ; **F. T. EGGERTSEN**. Determination of Surface Area. Adsorption Measurements by Continuous Flow Method. *Anal. Chem.*, 1958, vol. 30 (8), 1387-1390